(19) **Europäisches Patentamt**
**European Patent Office**
**Office européen des brevets**

(11) **EP 2 101 229 B2**

(12) ## NEUE EUROPÄISCHE PATENTSCHRIFT
Nach dem Einspruchsverfahren

(45) Veröffentlichungstag und Bekanntmachung des Hinweises auf die Entscheidung über den Einspruch:
**15.07.2015 Patentblatt 2015/29**

(45) Hinweis auf die Patenterteilung:
**28.09.2011 Patentblatt 2011/39**

(21) Anmeldenummer: **08004701.2**

(22) Anmeldetag: **13.03.2008**

(51) Int Cl.:
**G05B 19/042** (2006.01)    **F24C 7/08** (2006.01)

(54) **Verfahren zum Bereitstellen eines intelligenten Mensch-Maschinen-Interfaces bei Gargeräten**

Method for creating an intelligent human-machine interface for cooking devices

Procédé destiné à la préparation d'interfaces homme-machine intelligentes dans des appareils de cuisson

(84) Benannte Vertragsstaaten:
**AT BE BG CH CY CZ DE DK EE ES FI FR GB GR HR HU IE IS IT LI LT LU LV MC MT NL NO PL PT RO SE SI SK TR**

(43) Veröffentlichungstag der Anmeldung:
**16.09.2009 Patentblatt 2009/38**

(73) Patentinhaber: **Rational AG**
**86899 Landsberg/Lech (DE)**

(72) Erfinder:
- **Greiner, Michael, Dr.**
  **86899 Landsberg (DE)**
- **Hömme, Regina**
  **86152 Augsburg (DE)**
- **Kling, Judith**
  **86899 Landsberg (DE)**
- **Wiedemann, Peter**
  **86836 Klosterlechfeld (DE)**
- **Seemüller, Simon**
  **86825 Bad Wörishofen (DE)**
- **Jürgens, Andrea**
  **85551 Kirchheim (DE)**
- **Schuller, Erwin**
  **82515 Wolfratshausen (DE)**
- **Schühler, Bernhard**
  **86845 Grossaitingen (DE)**
- **Dietmayer, Cornelia**
  **86947 Weil (DE)**
- **Dobos, Laszlo**
  **85253 Erdweg/Hof (DE)**
- **Steinhofer, Ingrid**
  **80333 München (DE)**
- **Breunig, Manfred**
  **86956 Schongau (DE)**

(74) Vertreter: **Weber-Bruls, Dorothée et al**
**Jones Day**
**Nextower**
**Thurn-und-Taxis-Platz 6**
**60313 Frankfurt am Main (DE)**

(56) Entgegenhaltungen:
**EP-A- 1 528 464      EP-A- 1 624 689
EP-A- 1 758 000      EP-A1- 1 780 620
WO-A-01/12039       WO-A-2004/099673
WO-A-2007/027621    DE-A1- 10 103 948
DE-A1- 10 236 960    DE-A1- 10 300 465
DE-A1-102004 013 553  US-B1- 6 400 996
US-B1- 7 057 142**

- **'Betriebsanleitung Elektro-Combidämpfer HansDampf, Modellen 6.1, 6.2, 10.2, 10.2,20.1, 20.2,', 2007, MKN MASCHINENFABRIK, WOLFENBÜTTEL Seiten 1 - 74**
- **Blatt für Patent, Muster und Zeitwesen Heft 2/2007, Seiten 64-65**

**EP 2 101 229 B2**

**Beschreibung**

Die Erfindung betrifft ein Verfahren zum Bereitstellen eines intelligenten Mensch-Maschinen-Interfaces bei Gargeräten.

Gargeräte für professionelle und kommerzielle Anwendungen zeichnen sich zunehmend durch eine große Anzahl von Möglichkeiten aus, dem Anwender einen Einfluss auf die Steuerung von Garprogrammen zu eröffnen und damit das Garergebnis zu beeinflussen. Gleichzeitig wird versucht, die Bedienbarkeit solcher Gargeräte zu vereinfachen, um auch weniger versiertem Personal die Möglichkeit zu geben, mit diesen Gargeräte arbeiten zu können. Die Gratwanderung, die sich daraus ergibt, dass einerseits die Bereitstellung zusätzlicher Optionen für den Anwender zu einer komplexeren Bedienbarkeit des Gargeräts führt und andererseits eine Vereinfachung der Bedienbarkeit häufig zu einer Reduzierung der Möglichkeiten des Anwenders führt, das Ergebnis eines Garprogramms zu beeinflussen, stellt eines der zentralen Probleme bei der Verbesserung solcher Gargeräte dar.

Ein zugangskontrollierbares Gargerät ist aus der DE 102 36 960 A1 bekannt. Dieses Gargerät zeichnet sich auch dadurch aus, dass eine für mindestens einen zugangsberechtigten Benutzer vorgegebene oder einstellbare, insbesondere veränderbare, individuelle Benutzeroberfläche, insbesondere umfassend ein Bedienfeld, vorgesehen ist.

Die DE 103 00 465 A1 beschreibt ein Garverfahren, bei dem eine Clusteranalyse angewendet wird. Mit dem Clusterverfahren werden die vielen Parameter, die beim Garen zu beachten sind, auf wenige Schlüsselgrößen reduziert. Durch die so erfolgte Reduzierung von Datenmengen können selbst komplexe Zusammenhänge analysiert und zur Steuerung von Garprogrammen verwendet werden. Eine Auswertung des Anwenderverhaltens ist jedoch nicht vorgesehen.

Aus der EP 1 758 000 A1 ist ein Gargerät mit automatischen Garprogrammen bekannt, die mit einem Verfahren auf der Grundlage von Anwendereingaben konfigurierbar, sind. Dabei wird es einem Anwender ermöglicht, sein Gargerät gezielt durch Einstellen einzelner Parameter öder global durch eine Sprachauswahl an seine persönlichen Ansprüche oder als allgemein geeignet vorausgesetzte Ansprüche anzupassen. Nachteilig ist hieran, dass der Anwender im ersten Fall gezielt in vorgegebene Garprogramme eingreifen und dazu umfassende Kenntnisse zu Garparametern haben muss. Dies ist gerade bei komplexeren Gargeräten wie z. B. Kombidämpfen kaum zu realisieren, da diese über eine Vielzahl von unterschiedlichen Garparametern (Garraumtemperatur, Feuchte im Garraum, Lüftergeschwindigkeit, Kerntemperatur und Zeit) gesteuert werden und so eine zeitraubende Eingabeprozedur erzwingen, die von einem normalen Anwender aufgrund der Komplexität der Zusammenhänge kaum bewältigt werden kann. Für den Fall einer Sprachauswahl können nur bestimmte, vorher definierte Sätze von Garprogrammen durch den Anwender modifiziert werden, wodurch spezifischere Wünsche des Anwenders unberücksichtigt bleiben.

Aus der EP 0 285 056 B1 ist ein Übertragungssystem für einen Kochrechner bekannt, bei dem sich eine Vielzahl von Gargeräten über eine zentrale Station auslesen und steuern lassen. Zur Verarbeitung der Daten wird jedoch ein Anwender benötigt, der gegebenenfalls Garparameter in ferngesteuerten Gargeräten anpasst. Eine automatisierte Einstellung der Gargeräte oder eine anwenderspezifische Einstellung der einzelnen Gargeräte ist nicht vorgesehen.

Die EP 1 605 730 A1 beschreibt ein Verfahren zur Automatisierung eines Garprozesses unter Anwendung eines stochastischen Verfahrens bei Verwendung einer periodischen Abfrage der Garguttemperatur. Dabei werden verschiedene Rezepte, denen ein Wahrscheinlichkeitsübergangsparameter aus einer Wahrscheinlichkeitsrechnung zugeordnet wird, in einem elektronischen Register geordnet. Basierend auf der Wahrscheinlichkeitsrechnung wird der Garprozess mit Hilfe einer stochastischen Simulation berechnet. Nachteilig ist hieran, dass Garvorgänge im wesentlichen keine nicht linearen chaotische Prozesse sind, so dass Wahrscheinlichkeitsrechnungen nicht gut geeignet sind, um solche Garprozesse zu steuern oder vorauszuberechnen.

Die US 6,400,996 B1 offenbart ein adaptives Interface für ein programmierbares System zur Vorhersage von gewünschten Anwenderfunktionen basierend auf einer Anwenderhistorie sowie einem internen Status einer zu steuernden Maschine.

Aus der EP 1 528 464 A2 ist ein proaktives Anwender-Interface bekannt, das auf eine Nutzung von neuronalen Netzwerken bei Eingabevorrichtungen für Computer und ähnliche Vorrichtungen eingerichtet ist.

Die EP 1 624 689 A1 befasst sich mit einem Multimediaverteilungssystem oder einem interaktiven digitalen Broadcast-System, bei dem ein Anwenderverhalten analysiert werden soll.

Aus der WO 01/12039 A2 ist ein Verfahren zur Bereitstellung eines an die individuellen Verbraucherwünsche angepassten Getränks bekannt. Dabei kann ein Verbraucher eine Auswahl einer Getränkeart und verschiedener weiterer Eigenschaften nach seinen geschmacklichen Vorlieben treffen.

Ein Verfahren zum Bereitstellen eines intelligenten Mensch-Maschinen-Interfaces bei Gargeräten ist aus der WO 2007/027621 A2 bekannt, bei dem in dem Fall, in dem ein Anwender eine Tür öffnet, davon ausgegangen wird, dass der Gargrad eines Garguts überprüft oder ein Gargut aus dem Garraum entfernt wird, weshalb der Garbetrieb des Gargeräts pausiert wird.

Die US 5,875,430 beschreibt ein intelligentes Netzwerk für kommerzielle Küchen, bei dem eine Vielzahl von Gargeräten mit einem Kommunikationssystem verbunden ist. Dabei wird auch ein gattungsgemäßes Verfahren beschrieben, bei dem die Gargeräte Daten zu Arbeitsbedingungen über eine Datenverbindung an ein Kontrollzentrum senden und dabei Informationen über eine Reparaturbedürftigkeit, kombiniert mit passenden Aufträgen zur Reparatur, einschließlich Rechnungsstellung, weiterleiten. Aufgrund der Diagnose durch das Kontrollzentrum können auch Kochprofile eines spezifischen Gargeräts modifiziert werden. Nachteilig ist hieran, dass lediglich Fehlfunktionen der Gargeräte erkannt und entsprechende Reparaturmaßnahmen eingeleitet werden können. Eine Verbesserung der Ergebnisse im Normalbetrieb der Gargeräte ist durch dieses Verfahren also nicht möglich.

Aus der DE 101 03 948 A1 ist ein Verfahren zur Eingabe von Steuerinformationen in ein Hausgerät bekannt, bei dem eine biometrische Erkennung eines jeden Anwenders durchgeführt wird, damit er einer von mehreren Benutzer- und/oder Berechtigungsebenen zugeordnet werden kann.

Die DE 10 2004 013 553 A1 offenbart ein Gargerät, bei dem mindestens ein Parameter eines vorgegebenen Programms voreingestellt und veränderbar ist, wobei die Voreinstellung spezifisch für einen Aufstellungsort und/oder eine Bediensprache ist.

Der vorliegenden Erfindung liegt also die Aufgabe zugrunde, ein Verfahren zum Bereitstellen eines intelligenten Mensch-Maschinen-Interfaces bei Gargeräten zu liefern, das zum einen eine verbesserte und erweiterte Auswertung der Daten von Gargeräten ermöglicht und zum anderen ein einfaches und in der Bedienung durch den Anwender möglichst unaufwendiges Verfahren bereitstellt, mit dem die Voreinstellungen und die Eigenschaften des Gargeräts an verschiedene Anwender spezifisch angepasst werden können.

Diese Aufgabe wird gelöst durch ein Verfahren nach Anspruch 1. Bevorzugte Verfahren sind in den Ansprüchen 2 bis 25 beschrieben.

Schliesslich betrifft die Erfindung noch ein Gargerät zum Durchführen eines erfindungsgemässen Verfahrens nach Anspruch 26.

Der Erfindung liegt somit die überraschende Erkenntnis zugrunde, dass es einerseits durch ein zentrales Sammeln und Auswerten von Daten, die gewonnen werden aus Anwendereingaben oder auf der Grundlage von Anwenderverhalten, das anhand der Benutzung eines Gargeräts und/oder anhand von Sensordaten abgeschätzt und klassifiziert wird, möglich ist, eine Optimierung von Voreinstellungen des Gargeräts sowie eine Verbesserung bei der Beratung der Anwender zu erreichen. Dabei kann der Anwender aufgrund der Auswertung der Daten in eine Anwenderklasse eingeordnet, die Informationen über sein Nutzungsverhalten beinhaltet. Die Einordnung des Anwenders in eine bestimmte Anwenderklasse bietet den Vorteil, dass so individuelle Grundeinstellungen des Gargeräts aber auch eine individuelle Beratung des Anwenders möglich wird. Aufgrund der unterschiedlichen typischen Wunschvorstellungen bezüglich Garergebnissen, Menüführung, Einstellmöglichkeiten, etc. der verschiedenen Anwender sind den verschiedenen Anwenderklassen unterschiedliche Gargeräteinstellungen zugeordnet, die dem durch die Auswertung der Daten erkannten Verhalten des Anwenders möglichst genau entsprechen.

Zur Auswertung sind beispielsweise die historischen Betriebsdaten des Gargeräts geeignet (Heizdauer einer Heizeinrichtung, Betriebsstunden eines Dampfgenerators, Anzahl und Dauer angewählter Betriebsarten, Garraumtemperaturen, Umdrehungsgeschwindigkeit und Betriebsdauer eines Lüfterrads, Häufigkeit und Intensität der Benutzung einer Beschwadungseinrichtung und einer Ablöscheinrichtung, usw.). Ebenso ist das Nutzungsverhalten des Anwenders auch direkt auswertbar. Dazu zählt insbesondere, welche Programme wie oft angewählt wurden und wie oft diese bis zum Abschluss durchgelaufen sind, welche Eingaben und Betriebsarten typischerweise unmittelbar nach den verschiedenen Garprogrammen angewählt wurden, welche Gargüter und Lebensmittelgruppen überwiegend zubereitet wurden, welche Arten von selbst programmierten Garprogrammen wie häufig eingesetzt wurden, welche manuellen Einstellungen bei den vorgegebenen und bei selbst programmierten Garprogrammen verwendet wurden, wie häufig Hilfefunktionen bei welchen verschiedenen Betriebszuständen des Gargeräts aufgerufen wurden, wie oft und welche Reinigungsprogramme angewählt und durchgeführt wurden und mit welchen Einstellungen/Settings die Automatikprogramme verwendet wurden. Auch der zeitliche Verlauf solcher Daten und die zeitliche Gruppierung der Daten bezogen auf z. B. die Tageszeit, Jahreszeit und im Laufe des Lebenszyklus des Gargeräts kann aufgenommen und ausgewertet werden.

Die ausgewerteten und gruppierten Daten können im Anschluss für unterschiedliche Zwecke eingesetzt werden. So ist es beispielsweise möglich, die Daten Vertriebsmitarbeitern zur Verfügung zu stellen. Dazu kann die Auswertung z. B. die verschiedenen Anwender anhand der Daten klassifizieren bzw. clustern. Durch eine solche Clusterung kann der Vertriebsmitarbeiter dem Anwender auf ihn zugeschnittene Angebote unterbreiten, z. B. ihm geeignetes Zubehör anbieten. Wird also beispielsweise festgestellt, dass der Anwender häufig kurze Garprogramme bei sehr hohen Temperaturen einsetzt und häufig Grillprogramme als automatische Garprogamme verwendet, ist es nahe liegend, ihm Grillzubehör, z. B. einen Grillrost, anzubieten.

Neben dem Weiterleiten von ausgewerteten Daten an einen Vertriebsmitarbeiter ist es auch denkbar, dass das Gargerät selbst entsprechende Vorschläge auf einer Anzeigeeinrichtung des Gargeräts graphisch und/oder alphanumerisch darstellt, z. B. dem Anwender in Textform den Kauf oder die Verwendung eines Zubehörs insbesondere zusammen mit einer Preisempfehlung vorschlägt. Dazu ist es sinnvoll, dass das Gargerät Informationen über das bereits gekaufte Zubehör entweder durch die Eingabe eines Vertriebsverantwortlichen oder Servicetechnikers, insbesondere in Form eines Softwareupdates, erhält. Die Informationen können auch online zur Verfügung gestellt bzw. durch das Gargerät abgerufen werden. Die Zubehörteile können ebenso durch eine geeignete Signatur (z. B. Strichcode, RFID) mit entsprechenden Sensoren im Gargerät erkannt werden. Auch können im Rahmen einer automatisierten Beratung durch das Gargerät die besonderen Vorzüge des Gargeräts dem Anwender dargestellt werden. Im Allgemeinen ist es dazu zweckmäßig, die Daten während der Auswertung zu verdichten und zeitlich zu ordnen. Hierdurch lassen sich die Bedürfnisse und Gewohnheiten der Anwender besser berücksichtigen. Auch ist es so möglich, dem Anwender Einsparpotenziale aufzuzeigen, beispielsweise durch eine Visualisierung des zeitlichen. Verlaufs der Nutzung seines Gargeräts. So sind beispielsweise die Auswirkungen durch einen Personalwechsel (Nutzung, Leerlaufzeit, Stillstandszeiten, Reinigungsverhalten) und/oder die Einführung neuer Abläufe wie (Finishing, Übernacht Garen oder andere automatische Garprogramme) leicht aufzuzeigen.

Die Auswertung der Daten kann dabei völlig unterschiedlich sein. In einem Cluster kann beispielsweise ausgewertet werden, wie oft Geflügel gegart wurde, woraus sich ggf. ein Bedarf für Zubehör, das zum Garen von Hähnchen geeignet ist, ergibt. Bei einer häufigen Anwendung von Garprogrammen für Kurzgebratenes käme als Zubehör eine Grill-, eine Pizzaplatte oder ähnliches Grillzubehör in Frage; werden häufig Backprogramme angewendet, könnten für den Anwender Backbleche hilfreich sein. Ebenso kann aber umgekehrt, wenn der Anwender bestimmte Garprogramme nicht anwählt, er über diese Garprogramme entsprechend informiert werden, damit er die Möglichkeit, diese anzuwenden, in Betracht ziehen kann. Andererseits kann eine zusätzliche Optimierung dadurch erreicht werden, dass eine intelligente Verarbeitung der gesammelten Daten erfolgt und/oder nach dem Ablauf eines Arbeitsprogramms, wie eines Gar- oder Reinigungsprogramms, dem Anwender die Möglichkeit gegeben wird oder er gezielt dazu aufgefordert wird, das gerade abgelaufene Programm zu beurteilen.

Die so aufgenommenen und ausgewerteten Daten können dem Anwender auch für eigene Rückschlüsse angezeigt werden. So kann es für den Anwender beispielsweise hilfreich sein, sich den zeitlichen Verlauf der Nutzungsstünden des Gargeräts in den verschiedenen Betriebsarten geordnet nach bestimmten Zeiträumen anzeigen zu lassen, um die Auslastung und Effizienz seiner Arbeitsabläufe zu kontrollieren und gegebenenfalls über den Kauf eines weiteren oder spezielleren Gargeräts sachgerecht urteilen zu können. Dabei ist z. B. die Anordnung der Daten in Monatswerten, Quartalswerten oder Jahreswerten besonders interessant, um die entsprechenden Änderungen im Vergleich zu Vormonatswerten, vorherigen Quartalswerten oder Vorjahreswerten aufzeigen zu können. Auch ist es denkbar, die am häufigsten angewählten Garprogramme in Form einer Rangliste anzuzeigen.

Im Folgenden werden anhand von Ausführungsbeispielen verschiedene erfindungsgemäße Auswertmöglichkeiten erläutert.

I. Anwenderklassifizierung

Zur Erstellung eines Anwenderprofils kann eine Vielzahl von typischen Anwendungs- bzw. Verhaltensmustern, die über die Eingabeeinrichtung am Gargerät oder die Betriebsabläufe des Gargeräts erkannt werden, ausgewertet werden. Eine mögliche Klassifizierung ist in der folgenden Tabelle ausgeführt:

Tabelle 1: Mögliche Zuordnung und Klassifizierung/Clusterungen eines Anwendungsverhaltens auf der Grundlage von Eingaben eines Anwenders und der Nutzung eines Gargeräts

| 1 | Nur manuelle Bedienung (Manueller Anwender) |
|---|---|
| 2 | Nutzt viel oder nur eigene Programme (versierter Anwender) |
| 3 | Nutzt viele Bratenprogramme und Delta-T Garen (Metzger) |
| 4 | Nutzt nur oder viele Backprogramme insbesondere mit Gärprogrammschritten (Bäcker) |
| 5 | Bedienkonzept der Automatikprogramme wird zielgerichtet befolgt (geschultes Personal) |
| 6 | Häufig und viele Änderungen |
| 7 | Nutzt viel Nachtgarung und andere Garprogramme mit langer Laufzeit (Intensiver Anwender) |
| 8 | Langer Leerlaufbetrieb mit unbeladenem Garraum, heizt sehr lange vor (Energieverschwender) |
| 9 | Häufige Passwortnutzung (hohes Sicherheits- und eventuell Qualitätsbewusstsein) |
| 10 | Hilfetexte werden häufig benutzt (Anwender ist für Anregungen offen und eventuell schlecht geschult) |

(fortgesetzt)

| 11 | Häufiges Abbrechen von Garprogrammen und häufige Türöffnung (ungeduldiger Anwender) |
|---|---|
| 12 | Finishing-Programme werden häufig genutzt (Anwender, bei dem viele Gerichte zeitgleich fertig werden müssen) |
| 13 | Regelmäßige und häufige Reinigung und/oder Verwendung intensiver Reinigungsprogramme (sorgfältiger, hygienebewusster Anwender) |
| 14 | Aufgezeichnete HACCP-Daten (Hazard Analysis of Critical Control Points) werden häufig ausgelesen (kontrollierender Anwender) |
| 15 | Frittierprogramme werden häufig angewendet (Anwender benötigt viele frittierte Produkte) |
| 16 | Spezialfunktionen und Garprogramme für Sousvide werden häufig genutzt (Sousvi-de-Anwender) |
| 17 | Startzeitvorwahl wird häufig genutzt und/oder das Gargerät ist sehr häufig in Betrieb |
| 18 | Die Zwangsreinigung wird genutzt |
| 19 | Die Vernetzung mehrerer Gargeräte wird häufig genutzt (Anwender plant seine Küchenabläufe genau) |
| 20 | Zu bestimmten Zeiten, Jahreszeiten oder Terminen wird das Gerät intensiver genutzt (Anwender hat ein ausgeprägtes Saisongeschäft) |
| 21 | Gerät wird nur im Heißluftmodus oder nur im Dampfmodus betrieben (Anwender verwendet das Gargerät nur als Umluftofen oder als Dämpferersatz) |
| 22 | Anhand der Art des Tagesablaufs und der Gerätegröße kann die Art des Betriebs des Anwenders erkannt werden (morgens backen, vormittags garen und abends Finishing wäre für eine Hotelküche typisch) |
| 23 | Auswertung der Auswahl der automatischen Garprogramme (z. B. Anwender bietet hauptsächlich traditionelle Küche oder moderne Küche an) |
| 24 | Gargerät ist viel online und wird regelmäßig mit Updates versorgt (innovationsfreundlicher und professioneller Anwender) |
| 25 | Die Bediensprache des Gargeräts wird häufig geändert (wechselnde Anwender mit unterschiedlicher Nationalität) |
| 26 | Charakteristische Betriebsmoden oder Garprogramme werden besonders häufig angewendet (Nationalität der Küche kann erkannt werden, z. B. italienische Art mit viel Heißluftanteil, asiatische Art oder bayrische Küche, weil die Überkrustungsfunktion häufig genutzt wird, usw.) |
| 27 | Gargerät wird hauptsächlich für Fleischgerichte genutzt (Metzger) |
| 28 | Level-Control-Programme werden häufig genutzt (Anwender bietet in kleiner Küche Essen ä la carte) |
| 29 | Es werden hauptsächlich Garprogramme, die typisch für Fischgerichte sind, angewendet (Restaurant auf Fischgerichte spezialisiert) |
| 30 | Es werden hauptsächlich Geflügelprogramme gewählt (Geflügelspezialist) |
| 31 | Nutzung von Kombidämpfer mit niedriger Ausstattungsstufe, bei dem verschiedene Einstellungen häufig geändert werden und angepasst werden (Bedarf für einen Kombidämpfer mit höherer Ausstattung) |
| 32 | Nutzt Kerntemperaturfühler häufig (Kerntemperaturfühleranwender) |
| 33 | Mikrowellengenerator wird häufig genutzt (Mikrowellenanwender) |

(fortgesetzt)

| 34 | Beschleunigte Garprogramme, häufiges Zuschalten der Mikrowelle (Hochgeschwindigkeitsanwender) |
|---|---|

In Abhängigkeit von der Zuordnung des Anwenders und der Art seines Betriebs können durch das Gargerät gezielte Informationen zu den Potentialen des Gargeräts an den Anwender weitergeleitet werden, und/oder der Vertrieb des Gargeräteherstellers kann über einen möglicherweise vorhandenen Bedarf informiert werden.

Die in Tabelle 1 gezeigten, nicht abschließenden Klassifizierungen/Clusterungen werden tatsächlich anhand von mathematischen Bedingungen überprüft. So wird z. B. die Eigenschaft "nervöser/neugieriger Anwender" anhand einer oder mehrerer Bedingungen ermittelt. Als solche Bedingungen können beispielsweise die Häufigkeit der Verwendung der Zurück-Taste und die Verweildauer in einem Menü, bis die Zurück-Taste betätigt wird, gemessen werden. Ein geeignetes Maß kann auch beispielsweise die Häufigkeit der Verwendung der Zurück-Taste bezogen auf die Dauer, während der ein Anwender in den Bedienmenüs des Gargeräts navigiert, sein. Durch die mathematische Definition von Grenzen und Schwellwerten können dem Anwenderverhalten verschiedene Kennzahlen zugeordnet werden. Die mathematisch formulierten Bedingungen ergeben eine Kennzahl zwischen 0% und 100%. Diese Kennzahlen werden zu einer weiteren Kennzahl gewichtet zusammengeführt. So ergibt sich eine prozentuale Kennzahl für die entsprechende Eigenschaft.

Eine Klassifizierung kann also bereits durch ein einziges Kriterium einer wie auch immer gearteten Auswertung von Daten erfolgen. Als auszuwertende Daten kommen alle Sensordaten des Gargeräts in Frage aber auch alle Eingaben eines Anwenders des Gargeräts. Da dabei auch gerätespezifische Vorgaben berücksichtigt werden können, ist es möglich, dass eine bestimmte Anwenderklassifizierung oder Clusterung tatsächlich nur auf einen einzelnen Anwender bezogen sein kann.

Eine Möglichkeit ist demnach die Auswertung der Benutzung der Zurück-Taste innerhalb eines Zeitraums (pro Tag, Stunde, etc.) oder je gestartetem Arbeitsprogramm. Je häufiger die Zurück-Taste genutzt wird, desto unruhiger oder neugieriger ist der Anwender. Diese beiden Varianten, neugieriger und nervöser Anwender, lassen sich aber im zeitlichen Verlauf durch Auswertung der Häufigkeit solcher Ereignisse mit einer gewissen Wahrscheinlichkeit immer besser voneinander unterscheiden. Der neugierige Anwender wird die Zurück-Taste weniger nutzen, wenn er alles "erforscht" hat, wohingegen der unruhige Anwender sich weiterhin häufig vertippen und sich daher der Zurück-Taste bedienen wird. Dabei können die Kriterien bezüglich der Verwendung der Zurück-Taste wie folgt gesetzt werden:

1. nicht benutzt
2. bis zu zweimal benutzt
3. zwei- bis viermal benutzt
4. öfter als viermal benutzt

Zusätzlich kann ausgewertet werden, wie lange der Anwender in einer Maske zur Eingabe verbleibt, bis er die Zurück-Taste betätigt Zu den Kriterien werden also auch zeitliche Bewertungen der Ereignisse vorgenommen. Dabei gilt, dass ein neugieriger Anwender tendenziell länger in einer Maske verbleibt, während der nervösen Anwender eine kürzere Zeit verbleiben wird.

Der Übergang zwischen der Klassifizierung neugieriger oder nervöser Anwender wird nicht scharf, sondern gleitend definiert, was sich im Ergebnis anhand einer Aussagewahrscheinlichkeit widerspiegelt (z. B. neugierig 80% / nervös 20%). Ist die zeitliche Bewertung beispielsweise sehr kurz, so kann von einem 100% nervösen und 0% neugierigen Anwender ausgegangen werden. Liegt die Zeitdauer in einem mittleren Bereich kann mittels einer Interpolation mit Hilfe einer mathematischen Gleichung ein Wert zwischen zwei vorher definierten zeitlichen Grenzen ermittelt werden. Dabei kann z. B. eine lineare Funktion für alle Zeitelemente zwischen den Zeitgrenzen verwendet werden, als untere Grenze könnte z. B. $t0 = 3$ Sekunden angenommen werden. Für alle sich zwischendurch ergebenden Zeiten $t$ ergäbe sich für das Verhältnis nervöser und neugieriger Anwender die Wertung nach der folgenden Formel:

$$(1) \quad 100\% = t(t - t_0) \times 100\% : (t_1 - t_0) \text{ nervös} / (100\% - \text{Prozentwert nervös}) \text{ neugierig}$$

Aus einer Kombination der Kriterien und der zeitlichen Bewertung von Ereignissen könnte sich beispielsweise für die vier verschiedenen genannten Kriterien die folgende Klassifizierung ergeben:

1. 0% nervös / 0% neugierig
2. Datensatz nach X Zeiträumen: 20% nervös /10% neugierig
3. Datensatz nach Y Zeiträumen: 50% nervös /10% neugierig
4. Datensatz nach Z Zeiträumen: 100% nervös /0% neugierig

Die vier verschiedenen Kriterien führen also zu einer Gewichtung der zeitlichen Bewertung der Ereignisse, während die zeitliche Bewertung das Verhältnis der Wahrscheinlichkeiten für einen neugierigen und einen nervösen Anwender bestimmt.

Zudem werden Rohdaten, wie zur Garraumtemperatur, Feuchtigkeit, Ablöschtemperatur, Türöffnung, Kerntemperatur, usw., durch das Gargerät erfasst. Als Rohdaten kommen aber auch Informationen zum Nutzungsverhalten des Bedienkonzepts des Gargeräts (HACCP-Abfragen, Auswahl der Garprogramme, Spracheinstellungen, Hilfetext, usw.) in Frage, also zur Nutzung von Diagnoseprogrammen und Arbeitsprogrammen. Diese Rohdaten werden bei der Auswertung mittels eines Regelwerks bzw. mit Hilfe von Kriterien bewertet. Als Kriterium kann z. B. das Einschalten einer Betriebsart, das Erreichen von Sollparametern oder eine mangelnde Aktivität des Anwenders verwendet werden. Als Kriterien können beispielsweise die folgenden konkreten Grenzen bei der Bestimmung der Reaktionszeit eines Anwenders eingesetzt werden:

1. kürzer als 10 Minuten
2. länger als 10 Minuten, kürzer als 20 Minuten
3. länger als 20 Minuten, kürzer als 60 Minuten
4. länger als 60 Minuten

Wird das Kriterium 3. erfüllt, so wird ein Zähler bspw. um 1 erhöht, der ein Maß für die Aktivität des Anwenders ist. Der Zähler beinhaltet dann als Kennzahl die Information, wie häufig der Anwender in einem Zeitrahmen zwischen 20 und 60 min keine Aktivität gezeigt hat, nachdem beispielsweise ein bestimmter Sollparameter, wie die Garraumtemperatur, erreicht worden ist.

Stellt ein Anwender ein Garprogramm manuell nach, indem er z. B. bei Gargeräten ohne Programmierfunktion nach einer gewissen Zeit Temperatur oder Zeit verändert, ohne die Tür zu öffnen, kann aufgrund dieses Anwenderverhaltens bzw. Nutzungsverhaltens erkannt werden, dass für einen solchen Anwender ein programmierbares Gargerät geeigneter wäre.

Als weiteres Nutzungsverhalten könnte erkannt werden, dass ein Anwender manuell durch Öffnen der Tür den Garraum des Gargeräts entfeuchtet. Geschieht dies beispielsweise in einem bestimmten zeitlichen Abstand zu anderen Ereignissen und/oder während bestimmter Zeitfenster typischerweise immer gleich, ergibt sich daraus ein wiederkehrendes Muster. Die Zeitdauer der Türöffnung ist von einer Zeitdauer zum Entnehmen des Garguts leicht zu trennen, da direkt nach der Türöffnung und dem Wieder-Verschließen der Tür ein anderer Verlauf der Kerntemperatur und der Garraumtemperatur zu erwarten ist.

Die Liste von Kriterien nach Tabelle 1 ist beliebig erweiterbar. Im Allgemeinen erfolgen die Auswertungen aufgrund von Kriterien hinsichtlich eines zeitlichen Verlaufs, einer Nutzungshäufigkeit, einer Kombination bestimmter Funktionen oder eines bestimmten Profils (z. B. moderne Küche mit bestimmten Produkten und Temperaturen). Nachdem das Regelwerk die Bewertung vorgenommen hat und die Zähler entsprechend hochgezählt werden, erfolgt die Auswertung für den Vertrieb oder die Anzeige auf dem Gargerät. Die Auswertung kann sowohl im Gargerät selbst, als auch im Rechner eines Vertriebsmitarbeiters oder Servicetechnikers oder in einer zentralen Basisstation, mit der die Gargeräte verbunden sind, erfolgen.

Verschiedene Gruppen von Kriterien oder auch teilweise einzelne Kriterien können ausgewertet werden. Eine Kombination einzelner Kriterien erlaubt eine höhere Zuordnungsgenauigkeit zu einer Gruppe. Eine solche Clusterung erfolgt mit allgemein bekannten Clusterverfahren oder durch Prüfung von Zählerständen. Überschreitet ein Zählerstand bestimmte vorgegebene Werte, so erfolgt eine Einstufung. Eine Energieverschwendung ist beispielsweise zwischen

1. geringe Energieverschwendung
2. mittlere Energieverschwendung
3. hohe Energieverschwendung
4. sehr hohe Energieverschwendung

oder übersetzt in eine anwenderfreundlichere Beratungssprache

1. effiziente Arbeitsweise

2. Verbesserungspotential
3. Ersparnisquelle/Einsparmöglichkeiten circa X Euro pro Jahr
4. große Einsparmöglichkeit mit circa Y Euro pro Jahr

einzuordnen. Je nach Zählerstandbereich der einzelnen Kriterien und Zuordnung zu einem Cluster kann daraus eine Gesamtaussage über das Zutreffen der Kriterien ausgegeben werden. Je höher die Wahrscheinlichkeit des Zutreffens, desto weiter oben in der Liste des Vertriebsmitarbeiters erscheint dieser Punkt oder das Gargerät zeigt entsprechend Vorschläge ab dem Überschreiten gewisser Schwellwerte auf der Anzeigeeinrichtung des Gargeräts an. Dabei kann auch wie folgt gewichtet werden: je höher die Wahrscheinlichkeit des Zutreffens des Kriteriums, desto höher wird es in der Liste des Vertriebsmitarbeiters oder des Gargeräts priorisiert.

So können sich z. B. Informationen über die fünf wichtigsten Eigenschaften eines Anwenders wie folgt finden:

1. versierter Anwender
2. geschultes Personal
3. Nutzer der Startzeitvorwahl
4. Ohne Kerntemperaturfühler-Anwender
5. Verbesserungspotential bei der Energieeinsparung

Anhand dieser Liste kann der Vertrieb gezielte Argumentationen aufbauen und einen Vergleich zu früheren Zeitperioden vornehmen, um z. B. den Erfolg einer Schulungsmaßnahme oder den Effekt eines neuen Küchenchefs oder Softwareupdates nachzuweisen. Ebenso ist es durch die Anzeige dieser Eigenschaften der Anwender durch das Gargerät den Anwendern selbst möglich, die Effizienz ihres Bedienpersonals zu kontrollieren oder auch selbsttätig Optimierungen beim eigenen Umgang mit dem Gargerät zu überdenken.

Wie bereits geschildert, lassen sich auch ohne eine direkte Abfrage der Wünsche des Anwenders Rückschlüsse auf dessen Wünsche dadurch ziehen, dass eine Analyse des Verhaltens des Anwenders bei Eingabevorgängen erfolgt. Hierzu kommt beispielsweise der Zeitpunkt, die Anzahl und/oder Frequenz des Ein- und Ausschaltens einer Betriebsfunktion des Gargeräts oder die Verwendung eines Zubehörs in Frage. So können Funktionen, die längere Zeit nicht benutzt wurden, ausgeblendet werden. Dadurch wird die Übersichtlichkeit des Bedienmenüs erhöht. Durch die Erkennung der Gewohnheiten des Anwenders und Anpassung des Bedienkonzepts, d. h. Programme bzw. Funktionen werden z. B. auf die oberste Menüebene gelegt oder vergrößert bzw. heller dargestellt, wohingegen andere weniger relevante Funktionen auf untere Menüebenen (z. B. zweite oder dritte Menüebene) verlagert bzw. kleiner oder dunkler dargestellt werden, wird das Gargerät aus Sicht des Anwenders optimiert. Ebenso kann das Tages- bzw. Produktionsende intelligent berechnet werden, um z. B. ein spezifisches Reinigungsprogramm anzubieten oder auch ein solches Programm selbsttätig zu starten und zu beenden.

Die Klassifizierung des Anwenders, seiner spezifischen Vorlieben und/oder seiner Wünsche kann auch für ein voraussehauendes Vorheizen oder Abkühlen des Garraums oder ein Spülen des Dampfgenerators verwendet werden, um dem Anwender lästige Wartezeiten zu ersparen. Aus dem Zeitpunkt des Einschaltens und Ausschaltens von Garprogrammen, Reinigungsprogrammen oder Diagnoseprogrammen können auch Informationen über den Zustand des Gargeräts abgeleitet werden. Dazu ist insbesondere der letzte Einschalt- und Ausschaltzeitpunkt, das Ende und der Anfang der letzten bzw. ersten Betriebsart sowie der Zeitpunkt des Starts der letzten Aktion, wie z. B. Reinigung, Übernacht-Garen oder Startzeitvorwahl, verwendbar. Eine Mittelwertbildung über die Wochentage kann mit dem Ziel durchgeführt werden, ein automatisches Einschalten oder Ausschalten des Gargeräts erfolgen zu lassen oder geeignete Handlungshinweise zu geben. So kann beispielsweise aus dem Verhalten des Anwenders ein für seine Arbeitsabläufe typischer, passender Zeitpunkt gefunden werden, um eine Reinigung zu empfehlen. Neben der Empfehlung an den Anwender kann auch ein automatisiertes Ein- bzw. Ausschalten z. B. eines passenden Reinigungsprogramms durchgeführt werden.

Bei der Veränderung der Voreinstellungen eines Programms kann der Zeitpunkt, die Anzahl und die Frequenz der Veränderungen berücksichtigt werden, wobei die Veränderungen nicht nur eine Veränderung eines Programmparameters umfassen, sondern auch eine Unterbrechung, eine Verkürzung und/oder eine Verlängerung des Garprogramms. So lässt sich der gesamte Verlauf eines Garprogramms anwenderspezifisch verändern. Eine zu schnelle Veränderung der Garprogramme durch ein einmaliges Ereignis bzw. eine einmalige Anwendereingabe oder eine einmalige Interpretation des Anwenderverhaltens kann so ausgeschlossen werden. Es ist beispielsweise möglich, die Korrekturen erst nach einer gewissen Anzahl von Wiederholungen zu übernehmen. Ebenso kann ein Mittelwert der Anzahl der letzten Korrekturen übernommen werden. Diese Korrekturen können dann auch wieder auf andere Garprogramme übertragen werden. So ist es dann möglich, die Voreinstellungen auch bei anderen Garprogrammen beispielsweise auf "durch" zu ändern, wenn in einem oder mehreren Garprogrammen wiederholt die Voreinstellung von "medium" auf "durch" geändert wurde. Wenn einzelne Garprogramme, wie z. B. Krustenbraten, mit anderen Voreinstellungen gespeichert werden, also z. B. immer die gleiche Kerntemperatur und Bräunung, kann diese Voreinstellung im gesamten Mutterprogramm, also z. B. für alle Großbraten, angepasst werden. Wird durch den Einbau eines Katalysators oder das Aufsetzen einer Abzugshaube das Gargerät verändert, können auch die Garprogramme entsprechend angepasst werden. Die Anpassung kann z. B. durch eine Erhöhung der Vorheiztemperatur, eine Verlängerung der Abkühlzeiten oder durch eine Verlängerung von Schrittlaufzeiten erreicht werden. Das Gargerät kann entweder selbständig durch Messung mit dazu geeigneten Sensoren feststellen, welche Umbauten am oder im Gargerät stattgefunden haben, oder diese können durch einen Kundendiensttechniker oder Servicemitarbeiter an der Eingabeeinrichtung des Gargeräts eingegeben werden.

Ein Wechsel der Spracheinstellungen des Gargeräts kann erfolgen, weil Anwender unterschiedlicher Muttersprache mit dem Gargerät arbeiten oder der Anwender regionale Spezialitäten in den jeweiligen Landessprachen ausprobieren möchte, um seine Küche authentischer zu machen. Dies kann daran erkannt werden, dass der Anwender jeweils nur die Landesspezialitäten in der entsprechenden Spracheinstellung anwählt, während die anderen Garprogramme in der ursprünglichen Einstellung ausgewählt werden. Erfolgt die Umstellung der Spracheinstellung nicht nur für einzelne Garprogramme, und werden die gleichen Garprogramme zu unterschiedlichen Zeiträumen in unterschiedlichen Sprachen angewählt, ist hingegen auf unterschiedliche Anwender mit unterschiedlicher Muttersprache zurückzuschließen.

Des Weiteren wird die Dauer einer Türöffnung, einer Programmauswahl, eines Stillstands des Gargeräts, eines Betriebs des Gargeräts und/oder der Reaktionszeit des Anwenders auf eine Handlungsaufforderung, wie z. B. eine Reinigungsaufforderung, Aufruf der Hilfefunktion des Gargeräts, der Fehlerdiagnose des Gargeräts, der Verbrauchswertdiagnose des Gargeräts und dergleichen bestimmt. Auch die historischen Betriebsdaten werden zur Auswertung aufgenommen (Betriebsstunden der einzelnen Betriebsarten, Temperaturverläufe aller Sensoren, wie z. B. die Kerntemperatur, Magnetrontemperatur, Garraumtemperatur, Technikraumtemperatur, sowie der Verlauf der Feuchtewerte, der Ablöschung, der Beschwadung, der Motordrehzahl des Lüfterrads, die Werte der Kalibrierung des Gargeräts, alle Fehlermeldungen und insbesondere die Notlaufzustände des Gargeräts). Auch die Häufigkeit der Anwahl der entsprechenden Betriebsarten und Garprogramme wird gespeichert.

Durch Auswertung der Daten können Türöffnungszeiten, Beschickungsmengen und Kalibergrößen erkannt werden und darauf mit einer Veränderung der Programme und Garprogramme reagiert werden. Bei einer Erkennung der Beschickungsmenge, d. h. einer Lasterkennung, kann ein Vergleich mit historischen Daten durchgeführt werden, um typische Produktionsmuster zu erkennen, z. B. Vollbeschickungen werden nur morgens verwendet, während mittags nur Einzelbeschickungen verwendet werden. Auch ein Leerlaufbetrieb kann so erkannt und das Regelverhalten nach einer gewissen Zeitspanne angepasst werden. So kann es beispielsweise im Leerlaufbetrieb notwendig sein, die Mikrowellentaktung deutlich zu reduzieren, um das Magnetron zu schonen und den Energieverbrauch zu reduzieren.

Die gesammelten Daten über die verwendete Hardware, das verwendete Gargerät, Zubehör oder dergleichen und/oder die verwendete Software, installierte Updates, die Vernetzung der Gargeräte oder dergleichen können ausgewertet und/oder automatisch an den Kundendienst oder Vertrieb weitergeleitet werden. Beispielsweise wird die Nutzungshäufigkeit zur Clusterung ausgewertet. Auch die Anzahl, die Dauer und die Häufigkeit einer Bedienblendenöffnung z. B. für Servicezwecke können anhand eines Temperaturabfalls an der Platine oder mit Hilfe eines eigens dazu eingebauten Sensors registriert werden. Ebenso können Stromausfälle bzw. deren Zeitpunkt und Dauer und entsprechende Reaktionen, sofern ein wiederkehrendes Muster erkannt wird, vom Gargerät dokumentiert werden.

Werden typische Muster erkannt, so kann, beispielsweise wenn in einem Entwicklungsland der Strom üblicherweise zu einem gewissen Zeitpunkt ausfällt, der Anwender darauf hingewiesen werden, dass, wenn er ein Garprogramm startet, das solange dauert, dass es in den entsprechenden Zeitraum des Stromausfalls hineinreicht, das Garprogramm wahrscheinlich nicht bis zum Ende durchgeführt werden kann. Auch ist es vorstellbar, dass das Gargerät, wenn aufgrund einer Restzeitberechnung erkannt wird, dass das Ende eines angewählten Garprogramms nur knapp in den Zeitraum eines voraussichtlichen Stromausfalls hineinlaufen könnte, das Garprogramm dahingehend anpasst, dass eine Beschleunigung des Garprogramms erfolgt, so dass das Garprogramm vor dem voraussichtlichen Beginn des Stromausfalls beendet werden kann.

Durch eine Erkennung von Ein- bzw. Ausschaltpunkten kann das Geräteverhalten wie folgt intelligent angepasst werden:

1. automatisches Ein- und Ausschalten für eine Zeit- und Stromersparnis
2. automatisches Vorheizen auf eine passende Betriebsart/Temperatur
3. Erstellen von Anzeigen zu geeigneten Zeitpunkten (z. B. Reinigungsaufforderung vor Ausschaltzeitpunkt)
4. Spülen des Dampfgenerators
5. Abkühlung vor Reinigungsprogramm oder einem Garprogramm

Wenn beispielsweise ein Anwender zum Produktionsbeginn jeden Montagmorgen Spiegeleier brät, so erkennt dies das Gargerät an der Auswahl des automatischen Garprogramms für Spiegeleier und kann dies mit dem internen elektronischen Kalender abgleichen. Das Gargerät speichert dies und heizt sich zu gegebener Zeit (automatische Erkennung des Einschaltzeitpunkts) auf die entsprechende Betriebsart vor. D. h., dass das Gargerät selbständig das Garprogramm "Eier-Braten, dünn" auswählt und bereits mit dem Vorheizen beginnt, schon bevor der Anwender dies selbst ausgewählt hat. Gleichzeitig berücksichtigt das Gargerät die üblicherweise durch den Anwender verwendeten Voreinstellungen für das entsprechende Garprogramm.

Manche Garprogramme beinhalten zusätzliche Optionen für den Anwender, deren Verwendung vom Gargerät gespeichert werden kann. Solche Optionen bei Garprogrammen sind z. B. zusätzliches Gären bei Backprogrammen, Umstecken des Kerntemperaturfühlers, wenn verschieden große Gargüter mit dem selben Garprogramm gegart werden sollen, die Option "Einschneiden Überspringen", bei der ein Anwender das Einschneiden eines Krustenbratens während ein automatisches Garprogramm "Krustenbraten" überspringen kann, usw. Je nach Häufigkeit der angewählten Optionen können dabei verschiedene Prioritätsklassen unterschieden werden:

1. Option wird nie angewählt -> Option wird gelöscht
2. Option wird selten angewählt -> Optionen entfallen nicht vollständig, sondern werden in einem tieferen Untermenü gespeichert
3. Option wird häufig angewählt -> als Option beibehalten bzw. gezielt zur Bedienung der Option auffordern und nachfragen
4. Option wird sehr häufig angewählt -> Option ist keine Option mehr, sondern wird fest in den Garverlauf eingebaut und muss gegebenenfalls aktiv entfernt werden

Beispielsweise könnte in einem Garprogramm "Übernacht-Braten" stets die Option "Anbraten Überspringen" angewählt werden, weil der Anwender den Großbraten bereits zuvor in einer Pfanne anbrät und somit nicht das Anbraten des automatischen Garprogramms verwenden möchte. In diesem Fall hat der Anwender eventuell eine Kippbratpfanne neben einem Kombidämpfer stehen und brät immer manuell an. Somit kann nach der Erkennung bzw. der Anwenderklassifizierung die Option entfallen und der Anbratschritt automatisch aus dem Garverlauf entfernt werden.

Ein weiteres Beispiel für die Beobachtung von Anwendergewohnheiten ist, dass der Anwender während eines Garprogramms ungefähr immer zur selben Zeit die Tür (bei Kombidämpfern) oder den Deckel (bei Kippbratpfannen) öffnet, Dieses Türöffen wird automatisch erkannt und der Zeitpunkt der Türöffnung wird in Relation zu den einzelnen Garphasen bzw. zur Garzeit gesetzt. Sobald eine Gesetzmäßigkeit erkannt wurde, wird aus den relevanten gespeicherten Werten ein Mittelwert gebildet. In dem Gargerät ist nun gespeichert, dass die Tür oder der Deckel im Mittel zu einem bestimmten Zeitpunkt geöffnet wird. Bei einem folgenden Garprogramm kann anhand der so erkannten bzw. errechneten Zeit automatisch ein optisches und/oder akustisches Signal in den Garverlauf implementiert werden, das den Anwender darauf hinweist, dass zu dieser Zeit üblicherweise die Tür geöffnet wird. Statt dem Mittelwert kann auch eine gewichtete Mittelwertbildung mit quadratischer Gewichtung durchgeführt werden. Auch können bestimmte Grenzen definiert sein, innerhalb derer die Werte liegen müssen, um zur Mittelwertbildung beizutragen.

Ein solches Anwenderverhalten kann beispielsweise auftreten, wenn der Anwender immer kurz vor Garende eine Marinade auf das Produkt streichen möchte. Er wird dann immer circa 5 Minuten vor dem Ende des Garvorgangs die Tür öffnen. Das Gargerät erkennt als Gesetzmäßigkeit, dass immer circa 5 Minuten vor Garzeitende die Tür geöffnet wird: Nach einer signifikanten Anzahl von Vorgängen wird ein automatisches Signal zum Öffnen der Tür optisch und/oder akustisch immer 5 Minuten vor Ende des Garvorgangs in den Ablauf implementiert. Beim ersten Auftreten des optischen und/oder akustischen Signals kann der Anwender über die Eingabeeinrichtung auch einen Namen, der seiner Meinung nach zu der gegebenen Aufforderung passt, eingehen. So könnte er beispielsweise vorgeben, dass der Text "Marinade Auftragen" zusammen mit dem entsprechenden Signal erscheint.

Eine Mittelwertbildung zur Bestimmung von angepassten Grundeinstellungen der Garprogramme kann auch dann von Interesse sein, wenn der Anwender die Grundeinstellungen nicht immer im gleichen Maß verändert. So ist es möglich, die Grundeinstellungen für einen oder mehrere Garprogramme, die der Anwender verwendet, zu mitteln und den gemittelten Wert als neue Grundeinstellung für das oder die Garprogramme zu verwenden. Des weiteren ist es möglich, auch Veränderungen der Wünsche des Anwenders zu berücksichtigen, indem zur Bildung des Mittelwerts nur diejenigen Werte verwendet werden, die nicht länger als z. B. einen Monat oder eine beliebige andere Zeitdauer zurückliegen.

Auch die Nutzungsgewohnheiten des Anwenders bezüglich der Beschickungsmenge kann durch das Gargerät erkannt werden. Anhand der Lasterkennungen der verschiedenen Garprogramme wird z. B. erkannt, dass der Anwender häufig mit Vollbeschickungen gart. Dies kann beispielsweise dadurch bestimmt werden, dass nach der Beladung des Garraums die Garraumtemperatur sehr stark abfällt und das Gargerät eine lange Zeit benötigt, um den Garraum wieder auf die Soll-Garraumtemperatur zu heizen. Selbstverständlich ist es auch möglich, andere Sensoren zur Bestimmung der Last zu verwenden (Gewichtserkennung, Erkennung welche Einschübe verwendet werden oder ein optischer Sensor, mit dem die Beladung der Einschübe erkannt wird). Eine Anpassung der Garprogramme ist dann dahingehend sinnvoll, dass eine höhere Vorheiztemperatur bei der Anwahl dieser Garprogramme verwendet wird. Ebenso kann eine frühere Entfeuchtung, eine Anpassung der Restzeitberechnung oder eine Veränderung der Lüfterdrehzahl als Anpassung zweck-

10

mäßig sein.

Auch kann die Nutzungsgewohnheit des Anwenders bezüglich des verwendeten Zubehörs ausgewertet werden. Das in den Garraum eingebrachte Zubehör wird z. B. mit Hilfe von Strichcodes oder RIFD Chips erkannt, und die Häufigkeit der Verwendung bezogen auf die unterschiedlichen Garprogramme und die Zeitpunkte der Verwendung kann ausgewertet werden. Als Folge kann das Garprogramm angepasst werden, wenn bekannt ist, dass z. B. typischerweise für eine bestimmte Anwendung ein Katalysator in den Garraum eingebracht wird, um eine störende Rauchentwicklung und entstehende Gerüche zu reduzieren. Auch könnte eine Anpassung der Garzeit oder auch eine Anpassung der Reinigungschemie für einen anschließenden Reinigungsvorgang zweckmäßig sein. Wird bspw. stets ein stark Wärme übertragender Grill zur Erzeugung von Grillmustern auf dem Gargut im Garprogramm "Kurzgebratenes" verwendet, kann das Gargerät eine an die Grillroste angepasste Anfangstemperatur verwenden.

Wird beispielsweise erkannt, dass der Anwender typischerweise sehr lange zur Beladung des Garraums nach erfolgtem Vorheizen benötigt, kann es sinnvoll sein, die Vorheiztemperatur zu erhöhen, um die Energieverluste während der langen Türöffnungszeit während des Beladens auszugleichen. Ebenso kann die Vorheiztemperatur angepasst werden, wenn erkannt wird, dass der Anwender typischerweise mit bestimmten Kalibergrößen von Gargütern arbeitet. In diesem Fall kann auch die vom Anwender bevorzugte Größe des Garguts bei der Berechnung der Restzeit berücksichtigt werden. Verwendet der Anwender typischerweise sehr große Gargutdurchmesser, kann bei der Restzeitberechnung ein Korrekturfaktor verwendet werden, der dies berücksichtigt. Die vorausgesagte Restzeit wird dann länger als zuvor ausfallen, da das Gargerät mit Gargütern mit großen Durchmessern rechnet.

Als weiteres Kriterium für eine Nutzungsgewohnheit kann auch das häufige Abbrechen von Garprogrammen verwendet werden. Wird eine häufige Unterbrechung/Verkürzung der Garprogramme erkannt, weil die Garprogramme vorzeitig unterbrochen werden, gleichzeitig aber die Voreinstellungen des Garprogramms unverändert bleiben, können die entsprechenden Garparameter, z. B. eine Reduzierung der Garraumtemperatur oder eine Verkürzung der Garzeit vorgenommen werden.

Eine weitere Nutzungsgewohnheit des Anwenders kann die Garprogrammverlängerung sein. Wird nach den Garprogrammen mit manuellem Nachgaren eine zusätzliche/fehlende Gare des Garguts erzeugt, können die Garparameter daran angepasst werden, d. h. es erfolgt eine Erhöhung der Garraumtemperatur und/oder Verlängerung der Garzeit.

Sollten mehrere unterschiedliche Anwender mit dem gleichen Gargerät arbeiten, kann dies über die Eingabeeinrichtung eingegeben werden, um die Klassifizierung der Anwender zu vereinfachen. Jeder Anwender erhält dann eine bestimmte Kennung, die er über die Eingabeneinrichtung an das Gargerät überträgt, wenn er mit dem Gargerät arbeitet. Ebenso ist es natürlich möglich, in der Arbeitskleidung der Anwender RFID-Chips zu platzieren, die das Gargerät automatisch ausliest und erkennt, wenn sich der Anwender dem Gargerät nähert, insbesondere wenn Eingaben am Gargerät gemacht werden oder die Tür geöffnet, geschlossen oder bewegt wird. Eine entsprechende Eingabe durch den Anwender kann dann entfallen oder aber auch zusätzlich durchgeführt werden.

Anhand der verschiedenen Kriterien und Nutzungsgewohnheiten des Anwenders lassen sich die Anwender in spezifische Cluster gruppieren. Mit der Gruppierung der Anwender (z. B. Hotels, Ketten, Gemeinschaftsverpflegung, Systemgastronomie) können die Kocheinstellungen und Garverläufe des Gargeräts zusätzlich automatisch angepasst werden.

Eine Gemeinschaftsverpflegung kann z. B. dadurch erkannt werden, dass häufig Vollbeschickungen verwendet werden (in mehr als 60% der Fälle), dass vorwiegend innere Garparameter auf "durch" geändert werden (Korrektur der Einstellung bei über 80% der Fälle), dass selten die Anwahl des Garprogramms "Finishing ä la carte" verwendet wird (weniger als 10% der Fälle), dass häufig klassische Garprogramme wie z. B. Nudeln in Sosse oder Großbraten verwendet werden (in über 50% der Fälle), dass insgesamt wenig Durchmischung/Abwechslung der angewählten Programme/Garprogramme vorkommt (wenn 10 Programme mehr als 80% der insgesamt angewählten Programme betragen), wenn zumindest einmal täglich eine automatische Reinigung des Gargeräts durchgeführt wird, wenn keine Ruhetage vorkommen (Gerät wird an jedem Tag innerhalb von mindestens 3 Wochen verwendet), wenn feste Produktionszeiten verwendet werden (eine feste Anzahl von Betriebstunden in Abhängigkeit von der Tageszeit lässt auf feste Arbeitszeiten und Betriebszeiten schließen), wenn regelmäßig HACCP-Daten herunter geladen werden, dass Zubehör wie Abzugshauben oder Katalysatoren nicht installiert sind (Ausschlusskriterium), und/oder wenn Standgeräte verwendet werden (bei Standgeräten reicht ein geringerer Stichprobenumfang zur Entscheidung, ob es sich um eine Gemeinschaftsverpflegung handelt). Erst durch die Verknüpfung aller oder mehrerer Ereignisse bei einem unterschiedlichen Stichprobenumfang je Ereignis kann eine ausreichende Erkennungssicherheit gewährleistet werden.

Als Folge können verschiedene Kocheinstellungen und Garprogramme angepasst werden, die für eine Gemeinschaftsverpflegung typisch sind. Z. B. können für die Soll-Kerntemperatur sehr hohe Werte eingestellt werden, da in der Gemeinschaftsverpflegung meist darauf geachtet wird, dass die Gargüter gut durchgegart sind. Die Defaultwerte für die Garprogramme werden also auf "durch" gestellt. Dies kann für ein einzelnes Garprogramm, verschiedene Garprogramme oder sogar auf alle Garprogramme übertragen werden. Ebenso wird angenommen, dass häufig Vollbeschickungen verwendet werden, so dass die Vorheiztemperatur der Garprogramme erhöht werden kann, da diese Einstellung für Vollbeschickungen geeigneter ist.

Neben den Nutzungsgewohnheiten und den daraus abgeleiteten Bedienkonzepten oder Garverläufen können über reale Messwerte bei Garvorgängen Plausibilitätsprüfungen hinsichtlich der Richtigkeit der Anpassung getroffen werden. Bestätigt ein Anwender beispielsweise immer die Option "Anbraten-Überspringen", kann diese Optionstaste ausgeblendet werden. Dies kann durch eine Plausibilitätsprüfung der Kerntemperatur wie folgt bestätigt werden: Steigt die Kerntemperatur schneller an bzw. existiert ein Temperaturprofil im Fleisch, direkt nachdem das Gargut in den Garraum eingebracht wurde, kann davon ausgegangen werden, dass das Gargut zuvor angebraten wurde. Wird ein Gassensor zur Überwachung der Garraumatmosphäre verwendet, kann erkannt werden, dass ein typischer Bratgeruch vorhanden ist, wenn das Gargut in den Garraum eingebracht wird. Das Ausblenden der Optionstaste hat sich dann also als richtig herausgestellt. Wird hingegen festgestellt, dass das Gargut nicht angebraten in den Garraum eingebracht wird, so kann der Anwender gefragt werden, ob er das Anbraten tatsächlich überspringen will und dann gegebenenfalls eine Korrektur dahingehend durchgeführt werden, dass die Option "Anbraten-Überspringen" beim nächsten Aufrufen des Garprogramms wieder erscheint.

Auch ist eine Anpassung des Bedienkonzepts/der Bedienoberfläche in Abhängigkeit von der Historie des Betriebs des Gargeräts möglich, wobei eine Clusterung/Gruppierung der Anwender nach Produktionsgewohnheiten, wie oben geschildert, verwendet wird.

Eine automatische Anpassung des Bedienkonzepts/der Bedienoberfläche erfolgt dann bspw. durch eine neue Sortierung und Umstrukturierung der Garprogrammauswahlmöglichkeiten. Für eine Gemeinschaftsverpflegung kann beispielsweise die Anwahl von klassischen Garprogrammen erleichtert werden, indem diese eine Menüebene nach oben verlegt werden.

Dies kann auch beim Erkennen von Anwendergewohnheiten bzw. einer Regelmäßigkeit im Verhalten bei Produktionsstart bzw. Produktionsende für eine Optimierung der Geräteeinstellung genutzt werden. Startet ein Anwender beispielsweise bei Produktionsbeginn immer mit der manuellen Betriebsart "Heißluft, 250° C" (Häufigkeit über 80%) so kann eine Positionsveränderung eben dieser manuellen Betriebsart bezüglich des Bedienmenüs durchgeführt werden (die Anwahlwege zur Auswahl dieser manuellen Betriebsart werden verkürzt). Es ist sogar denkbar, dass beim Anschalten des Gargeräts das Gargerät direkt in die Betriebsart "Heißluft, 250° C" springt.

Arbeitet der Anwender häufig mit automatischen Garprogrammen (Häufigkeit über 80%) kann die Bedienebene für die automatischen Garprogramme nach oben verlegt werden, oder auch nur einzelne häufig verwendete Garprogramme in die obere Bedienebene des Menüs verlegt werden.

Auch hinsichtlich der Anwahl und der Nutzung von Optionen bei Garprogrammen durch den Anwender kann eine Anpassung des Bedienkonzepts erfolgen. Wenn z. B. Optionen nie verwendet werden (z. B. im Garprogramm "Braten mit Kruste" wird die Option "Einschneiden Überspringen" nie verwendet), können diese Anwahlmöglichkeiten ausgeblendet werden, um das Bedienkonzept/die Menüführung für den Anwender zu vereinfachen. Die entsprechenden Optionen werden in eine untere Ebene des Menüs verschoben werden, so dass sie noch stets erreichbar sind.

II. Arbeitsprogrammklassifizierung

Eine Verbesserung der Ergebnisse von Arbeitsprogrammen, wie bspw. Reinigungs- oder Garprogrammen, kann aus Sicht eines Anwenders auch dadurch erreicht werden, dass ein Gargerät aus dem Verhalten des Anwenders nach einem abgeschlossenen Garprogramm lernt.

Bricht der Anwender Garprogramme z. B. häufig oder immer kurz vor dem Erreichen des Endes des Garprogramms ab, so kann davon ausgegangen werden, dass der Anwender bei den von ihm gewählten Einstellungen ein geringeres Maß an Bräunung, Überkrustung oder einer anderen Form der Gare wünscht, als dies von dem automatischen Garprogramme veranschlagt wurde. Das Gargerät kann in solch einem Fall das entsprechende Garprogramm automatisch dahingehend anpassen, dass es auf eine geringere Bräunung, Überkrustung oder Gare ausgelegt ist. Bei einem nächsten Aufrufen des Garprogramms durch den Anwender erscheint dann auf einer Anzeigeeinrichtung z. B. "Garprogramm angepasst" und "Bräunung", "Krustierung" oder die betreffende Gare "wurde reduziert". Der Anwender kann daraufhin das modifizierte Garprogramm starten oder durch eine Eingabe die Modifizierung des Garprogramms ablehnen. Ebenso ist es vorstellbar, dem Anwender die Möglichkeit zu geben, die entsprechende Modifizierung zu verstärken oder abzuschwächen: So erscheint beispielsweise eine anwählbare Taste auf einem Touchscreen des Gargeräts auf der die Option "Standard" voreingestellt ist. Der Anwender kann durch Anwählen der Taste oder Eingabe an einer Eingabeeinrichtung des Gargeräts diese Voreinstellung auf "leicht", "gar nicht", "stark" oder "sehr stark" ändern und damit die Modifizierung des Garprogramms zusätzlich beeinflussen.

Der umgekehrte Fall ergibt sich, wenn nach dem Abschluss eines Garprogramms das Gargut nicht aus dem Garraum entfernt wird, sondern direkt nach Abschluss des Garprogramms eine zusätzliche Heißluftphase oder eine anderweitige Fortsetzung des Garprogramms durch den Anwender manuell eingestellt wird. Das fehlende Entfernen des Garguts aus dem Garraum kann dadurch erkannt werden, dass der Kerntemperaturfühler im Garraum verbleibt, d. h. die Temperaturen am Kerntemperaturfühler gleich bleiben, und/oder die Tür nicht oder zu kurz geöffnet wird, und/oder, wenn ein Sensor zur Überwachung des Zustands der Garraumatmosphäre im Gargerät vorhanden ist, erkannt wird, dass das eben gegarte Gargut im Garraum verblieben ist, weil immer noch Aromen des fertig gegarten Garguts in die Garraumatmosphäre entweichen. Ist dies einmal oder mehrere Male der Fall, kann das Garprogramm dahingehend angepasst werden, dass bei den gleichen Einstellungen des entsprechenden Garprogramms beim nächsten Aufruf durch den Anwender eine Verstärkung der Bräunung, Krustierung oder Gare voreingestellt wird. Der Anwender wird mit Hilfe der Anzeigeeinrichtung des Gargeräts über die Modifizierung des Garprogramms informiert, sobald er das Garprogramm aufruft. Er kann dann die Stärke der Modifizierung über die Eingabeeinrichtung bestimmen. Wurde bereits zuvor beispielsweise eine Verringerung der Bräunung bei den selben Einstellungen des Garprogramms durchgeführt, so fällt die Verstärkung anschließend entsprechend schwach aus, d. h. die Verstärkung wird entsprechend nach unten skaliert, so dass selbst bei einer sehr starken Modifizierung höchstens die ursprüngliche Grundeinstellung erreicht wird.

Auf der Basis der Eingabe bei den gegebenen Grundeinstellungen und dem ausgewählten Garprogramm kann darauf zurück geschlossen werden, ob derselbe Anwender bei bestimmten anderen Garprogrammen wohl ebenfalls eine ähnliche Modifizierung der Garprogramme wünschen würde. Dies kann bei einer Anwahl dieser anderen Garprogramme durch den Anwender anschließend berücksichtigt werden. Das heißt, dass neben dem ursprünglich modifizierten Garprogramm auch andere ähnliche Garprogramme, bei denen ein ähnlicher Wunsch des Anwenders zu erwarten ist, modifiziert werden.

Dazu können die Garprogramme und andere Arbeitsprogramme in Arbeitsprogrammklassen eingeordnet werden, bei denen die Änderung eines Programms aus einer Klasse auch gleichzeitig die Änderung der Arbeitsprogramme in derselben Arbeitsprogrammklasse bewirkt. Je nach Strukturierung der Arbeitsprogrammklassen kann einer solchen aber auch nur ein einziges Arbeitsprogramm zugeordnet sein. In diesem Fall besteht die Arbeitsprogrammklasse nur aus einem einzelnen Arbeitsprogramm, z. B. einem bestimmten Garprogramm oder Reinigungsprogramm.

Die direkfeste Möglichkeit die Wünsche des Anwenders zu erfahren, liegt jedoch darin, diese nach Abschluss eines Arbeitsprogramms direkt zu erfragen. Zu diesem Zweck zeigt das Gargerät nach Abschluss des Arbeitsprogramms auf der Anzeigeeinrichtung bspw. eine anwählbare Taste "Feedback". Wird diese Taste angewählt, erscheint ein Menü, bei dem der Anwender ein Feedback zu dem gerade abgelaufenen Arbeitsprogramm geben kann. Es ist auch möglich, das betreffende Arbeitsprogramm mit oder ohne eine Kennung zusammen mit dem Datum und der Uhrzeit und den Grundeinstellungen zu speichern, so dass der Anwender das Feedback auch zu einem späteren Zeitpunkt eingeben kann, indem er in einem speziellen Feedbackmenü des Gargeräts das bereits eine gewisse Zeit zurückliegende Programm aufruft und das Feedback zu einem Zeitpunkt gibt, zu dem er dafür Zeit hat oder zu dem er das Gargerät für nichts anderes benötigt und/oder er die entsprechenden Informationen über ein Gargut hat. In dem Menü kann der Anwender z. B. angeben, womit er bei dem entsprechenden Programm zufrieden oder unzufrieden ist. Dazu bestätigt er, ob er mit dem Ergebnis und/oder dem Ressourcenaufwand des Programms zufrieden war. Falls das Programm an irgendeiner Stelle nicht zu seiner Zufriedenheit gearbeitet hat, erscheint ein Untermenü, das spezifischer darauf eingeht, womit der Anwender nicht zufrieden war. Ausgehend von Anwendereingaben werden Parameter der folgenden Programme angepasst, d. h. für den Anwender optimiert. Diese Anpassungen/Optimierungen werden für das jeweilige Programm gespeichert.

In begrenztem Umfang kann ein solches Feedback auch bei den Grundfunktionen des Gargeräts eingeholt werden. Das abgefragte Endergebnis kann somit ein Garergebnis, ein Reinigungsergebnis oder einen technischen Ablauf des Gargeräts selbst betreffen. So ist es beispielsweise möglich, den Anwender nach den Grundeinstellungen zur Umdrehungsgeschwindigkeit des Lüfterrads zu befragen. Ist der Anwender beispielsweise der Meinung, dass fünf voreingestellte Lüfterstufen sich im unteren Drehzahlbereich zu stark unterscheiden, ist es möglich, entweder eine zusätzlich Lüfterstufe im niedrigen Drehzahlbereich einzufügen oder die vorhandenen fünf Lüfterstufen so zu modifizieren, dass die mittleren Lüfterstufen zu niedrigeren Drehzahlen hin verschoben werden. Auch ist es möglich, ein Feedback zum Aufbau eines Menüs selbst einzuholen und z. B. ein Eingabemenü selbst zu modifizieren. Erwartet der Anwender beispielsweise unter dem Menü "Großbraten" eine Auswahloption für einen großen Putenbraten, so kann er dies als Feedback eingeben, und bei der nächsten Auswahl des Menüpunkts "Großbraten" erscheint als zusätzliche Option der Garprogramm "Putenbraten" oder "Geflügel", das der Anwender dann anwählen kann.

Garergebnisse können über einen äußeren und einen inneren Garparameter bewertet werden. Ein äußerer Garparameter ist charakteristisch für die Bräunung, die Gleichmäßigkeit der Bräunung, die Knusprigkeit, die Ausprägung der Kruste, das Volumen des gegarten Garguts, die Oberflächenausbildung des Garguts, also im Allgemeinen die Eigenschaften der Oberfläche des gegarten Garguts. Ein innerer Garparameter ist charakteristisch für den Gargrad, die Saftigkeit, die Porenstruktur, die Zartheit, die Konsistenz, also im Allgemeinen die Eigenschaften im Inneren des gegarten Garguts. Als Ressourcen kommen beim Garen die Garzeit, der Gewichtsverlust des Garguts, der Materialeinsatz an Gargütern, der Wasserverbrauch, der Energieverbrauch und der Gasverbrauch in Frage. Beim Reinigen sind neben dem Wasserverbrauch, dem Energieverbrauch und dem Gasverbrauch auch der Verbrauch an Reinigungsmaterialien sowie die Dauer des Garprogramms von Interesse. Zur Beurteilung eines Reinigungsergebnisses kommt selbstverständlich auch die Reinigungswirkung in Betracht. Dazu sind Eingaben des Anwenders zur Restschmutzfläche, Ausprägung des Restschmutzes, dem Glanz im Inneren des Gargeräts (Kalkschleier) und die Haftfestigkeit des Restschmutzes möglich.

Die Abfrage der Anwenderzufriedenheit kann im Allgemeinen manuell über die Eingabeeinrichtung des Gargeräts erfolgen. Ebenso ist es aber möglich, eine sprachgesteuerte Eingabe durchzuführen. Je nachdem, wie detailliert das Feedback des Anwenders ist, können nach der Eingabe unterschiedliche Maßnahmen ergriffen werden. Erhält man als Feedback lediglich die Eingabe "zufrieden" oder "nicht zufrieden", so stellt dies ein Minimum an Information für ein weiteres Vorgehen dar. In dem Fall einer Unzufriedenheit kann z. B. die Grundfunktionalität des Gargeräts überprüft werden. Hierzu kann das Gargerät eine Selbstdiagnose durchführen und/oder eine entsprechende Nachricht an einen Servicetechniker weiterleiten. Insbesondere dann, wenn nur ein geringes Feedback durch den Anwender eingegeben wird, kann auf zusätzliche Informationen, die sich aus dem Verhalten des Anwenders schließen lassen, zurückgegriffen werden. Wenn der Anwender beispielsweise nach dem Benutzen des Garprogramms "Kuragebratenes" anschließend einen Heißluftbetrieb bei hohen Temperaturen einstellt, ohne das Gargut vorher aus dem Garraum zu entnehmen, so ist davon auszugehen, dass er sich eine stärkere Bräunung auf dem Gargut gewünscht hätte. Diese Informationen lassen sich dann wieder beim Aufruf des nächsten Garprogramms berücksichtigen. Ist der Anwender nach dem nächsten Durchführen des Garprogramms "Kurzgebratenes" zufrieden, so scheint die Veränderung des Garprogramms erfolgreich gewesen zu sein und wird beibehalten.

Präzisere Informationen lassen sich erhalten, indem eine Abfrage erfolgt, ob der Anwender mit den Einstellungen konkreter Parameter zufrieden war. Dies kann z. B. durch eine Auswahl über eine Skala erfolgen. Beim nächsten Aufruf eines Programms kann dann eine Korrektur der Parameter erfolgen. Falls die Ist-Einstellung und der Soll-Zustand innerhalb vorgegebener Parametergrenzen liegen, kann ein Abspeichern der neuen Parameter erfolgen. Falls der Soll-Zustand außerhalb der vorgegebenen Parametergrenzen liegt, kann, wenn der Zustand lediglich außerhalb der bisher verwendeten Skala liegt, eine Erweiterung der Parametergrenzen z. B. in Form einer stufenlosen Auswahl erfolgen. Liegt der Soll-Zustand außerhalb der Grenzen des durch das Gargerät Machbaren, so wird der Anwender darüber informiert, dass seine Wunscheinstellungen nicht möglich sind. Ebenso kann der Anwender eine Warnung erhalten, wenn er Soll-Zustände wünscht, die außerhalb der hygienischen Grenzen des jeweiligen Landes liegen. So ist es beispielsweise im europäischen Raum nicht üblich, bei Geflügel die Endkerntemperatur unterhalb von 72° C zu wählen, da ansonsten das Gargut aus europäischer Sicht hygienisch nicht einwandfrei ist.

Beispielsweise kann die Anwenderzufriedenheit bezüglich eines Grillmusters und/oder der Gardauer direkt nach dem Ablauf des Garprogramms "Grillen" wie folgt in fünf Stufen abgefragt werden:

Frage: "Wie sind Sie mit dem Grillmuster zufrieden?"

| | |
|---|---|
| Sehr gut ausgeprägt | = 1 |
| Gut ausgeprägt | = 2 |
| Noch befriedigend ausgeprägt | = 3 |
| Zu schwach ausgeprägt | = 4 |
| Nicht ausgeprägt | = 5 |

Frage: "Wie waren Sie mit der Gardauer zufrieden?"

| | |
|---|---|
| Garzeit verkürzen | = -1 |
| Garzeit in Ordnung | = 0 |
| Garzeit verlängern | = +1 |

Dabei kann entweder der Anwender selbst auswählen, welche Bewertung er durchführen möchte, oder es wird ihm eine Einzige oder eine Auswahl von Bewertungsmöglichkeiten dargeboten. Dies kann auch in Form eines Auswahlmenüs, z. B. geordnet nach innerem Garparameter und äußerem Garparameter, erfolgen. Je nach Auswahl und Eingabe des Anwenders wird dann eine Anpassung der Programme durchgeführt. Ist beispielsweise das Grillmuster "noch befriedigend" und die Garzeit "in Ordnung", wird die Garraumtemperatur um 20° C erhöht, oder, wenn sich die Garraumtemperatur nicht weiter erhöhen lässt, die Gardauer um 1 min erhöht. Ist beispielsweise die Bräunung (äußerer Parameter) gut und die Gare (innerer Garparameter) etwas zu durch, kann die Garraumtemperatur leicht erhöht werden, während die Gardauer etwas verringert oder der Kerntemperatursollwert etwas reduziert werden. Die mögliche Anpassung des Garraumklimas aufgrund der Eingabe durch den Anwender beim Garprogramm "Grillen" könnte beispielsweise wie in Tabelle 2 dargestellt ausfallen:

Tabelle 2: Veränderung des Garraumklimas beim Garprogramm "Grillen" aufgrund von Anwendereingabe

| Grillen | Temperatur | Feuchte | Gardauer | Lüftergeschwindigkeit |
|---|---|---|---|---|
| 1 | + 0° C | + 0 % | + 0 min | Bleibt |
| 2 | + 0° C | + 0 % | + 0,25 min | Bleibt |
| 3 | + 10° C | -10% | + 0,5 min | Bleibt |
| 4 | + 15° C | - 15 % | + 1 min | Höhere Stufe |
| 5 | + 20° C | - 20 % | + 2 min | Höhere Stufe |

Da der Anwender nach jedem Garprogramm erneut bewerten kann, nähern sich die Garprogramme immer mehr den Wunschvorstellungen des Anwenders. Um eine genauere Feineinstellung zu ermöglichen, kann die Schrittgröße (Garraumtemperatur, Feuchte, Gardauer, Kerntemperatursollwert, usw.) mit zunehmender Anzahl von Bewertungen reduziert werden.

Zielt die Abfrage darauf ab, ob der Anwender mit dem Ergebnis bzw. dem Ressourcenverbrauch zufrieden ist, so kann eine Anpassung aller möglichen Parameter hinsichtlich der Zielerreichung (Garprogrammablauf, Aktoren des Gargeräts, Reinigungsablauf, usw.) erfolgen.

Findet beispielsweise eine Abfrage nach einem beendeten Garprogramm über die Eingabeeinrichtung direkt am Gerät statt, die die Zufriedenheit des Anwenders z. B. mit der erreichten Bräunung des Garguts betrifft, so ist als Eingabemöglichkeit eine Skala des einzelnen Parameters in X Stufen, beispielsweise in fünf Stufen, denkbar. Als Abfrage zum äußeren Garparameter Bräunung kann dann beispielsweise die Frage erscheinen: "Wie würden Sie Ihr aktuelles Bräunungsergebnis einstufen" oder "Was ist Ihr Bräunungsziel?". Direkt darunter kann eine Anzeige mit fünf unterschiedlichen Farbfeldern erscheinen, auf denen die Bräunung als Helligkeitsverteilung oder in Echtfarbe angezeigt ist. Handelt es sich bei der Eingabeeinrichtung um einen Touchscreen, so kann die betreffende Farbe direkt ausgewählt werden. Ansonsten können über einen Rahmen, der das betreffende Feld umrandet, und mit Hilfe von Pfeiltasten oder einem Drehknopf auf der Bedieneinrichtung des Gargeräts die entsprechende Beurteilung des Garergebnisses und die Eingabe zum Bräunungsziel erfolgen.

Als Folge der Rückmeldung des Anwenders wird das folgende Garprogramm z. B. durch eine Veränderung der Garraumtemperatur und/oder der Garzeit angepasst. Dabei ist intern zu beachten, dass die weiteren abgefragten Parameter nicht maßgeblich verändert werden. Wenn eine Veränderung der weiteren Parameter unumgänglich ist, muss der Anwender im Vorfeld bzw. Nachgang darüber informiert werden. Dazu müssen die Informationen zu den möglichen Variablen mit dem Garprogramm verknüpft werden.

Ist der Anwender mit dem sensorischen Garergebnis zufrieden, erwartet jedoch eine kürzere Garzeit, kann er dieses Feedback im Rahmen einer Abfrage ebenfalls über eine Skala oder über direkte Zeiteingabe geben. Als Folge der Anwenderrückmeldung wird das folgende Garprogramm hinsichtlich der Betriebsart, Energieart, der Klimaparameter angepasst. So kann beispielsweise eine kürzere Mikrowellentaktung, d. h. eine höhere Mikrowellenleistung erfolgen.

Wenn z. B. gleichzeitig die Bräunung erhöht und die Gardauer verkürzt werden soll, muss sich die Garraumtemperatur besonders stark erhöhen. Da sich die verschiedenen Anwendereingaben gegenseitig beeinflussen können, wird bei den Veränderungen nach den zweiten und folgenden Anwendereingaben die der vorigen berücksichtigt. Der vom Anwender zuerst gewählte Parameter ist dabei führend, da anzunehmen ist, dass dieser Parameter aufgrund der Priorisierung bei der Eingabe für den Anwender der Wichtigste ist Wählt der Anwender beispielsweise eine kürzere Gardauer und dies ist ohne negative Einflüsse auf andere Parameter (z. B. Gewichtsverlust) nicht möglich, so kann er nach der Eingabe darauf hingewiesen werden und dies bestätigen (5 min schneller - Gewichtsverlust um ca. 5% höher - ok?).

Ist ein Anwender beispielsweise mit einem Reinigungsergebnis zufrieden, bemängelt jedoch einen zu hohen Wasserverbrauch, so kann er auch dies im Rahmen der Abfrage ebenfalls über eine Skala oder über eine direkte Wassermengeneingabe mitteilen. Als Folge der Rückmeldung wird das folgende Reinigungsprogramm angepasst. Dabei ist im Rahmen des Sinnerschen Kreises, der aus dem Stand der Technik gut bekannt ist, z. B, eine Erhöhung der Reinigungszeit oder eine Erhöhung des Chemikalieneinsatzes denkbar. Diese Folgen, die daraus resultieren, dass der Wasserverbrauch reduziert wird, können dem Anwender mitgeteilt werden. So ist es auch möglich, den Anwender darüber entscheiden zu lassen, ob er zur Reduzierung der verbrauchten Wassermenge eine Erhöhung der Reinigungszeit oder eine Erhöhung des Chemikalieneinsatzes bevorzugen würde. Er kann dann eine der beiden Optionen auswählen oder auf die Reduzierung des Wasserverbrauchs verzichten.

Bei den Wunscheingaben des Anwenders sind verschiedene Szenarien denkbar:

1. Anpassung der Programme -> Anwenderwunsch erfüllt -> keine Auswirkungen auf weitere Parameter

2. Anpassung der Programme -> Anwenderwunsch erfüllt -> Auswirkung auf weitere Parameter -> die Auswirkungen werden angezeigt oder verschwiegen (falls die Auswirkungen gezeigt werden, können diese mit einer Eingabe seitens des Anwenders bestätigt oder abgelehnt werden)

3. Anpassung der Programme zur Erfüllung des Anwenderwunschs nicht möglich -> Anpassung soweit möglich -> Aufzeigen der Grenzen

Der Vorteil der Anwenderabfrage liegt vor allem darin, dass ein Programm speziell und direkt auf die Anwenderwünsche angepasst bzw. dahingehend optimiert werden kann. Diese Erfahrungswerte werden im Gargerät abgespeichert und können durch den Vertrieb abgefragt werden. So können die Erfahrungswerte aus dem Markt für weitere Entwicklungen herangezogen werden. Auch ohne die Performance und deren Auswirkungen auf Ergebnisse beurteilen zu können, kann der Anwender entsprechend seiner Prioritäten Optimierungen vornehmen.

III. Anwenderklassifizierung und Arbeitsprogrammklassifizierung

Wie bereits erwähnt, können einerseits Modifizierungen von Einstellungen von Arbeitsprogrammen von Gargeräten durch Anwender zur Klassifizierung/Clusterung der Anwender ausgewertet werden. Andererseits kann durch eine Klassifizierung/Clusterung der Anwender eine Modifizierung von Parametern von Arbeitsprogrammen automatisch durchgeführt werden. Es ist aber auch möglich, dass gleichzeitig eine Klassifizierung eines Anwenders automatisch und eine Klassifizierung eines Arbeitsprogramm durch einen Anwender stattfinden und in Abhängigkeit beider Klassifizierungen zukünftige Arbeitsprogramme verändert werden, Informationen auf einer Anzeigeeinrichtung eines Gargeräts oder an einem von dem Gargerät entfernten Ort, beispielsweise an einem Kontrollzentrum, angezeigt werden.
Somit wird erfindungsgemäß erstmals ein intelligentes Mensch-Maschinen-Interface bei Gargeräten bereitgestellt, was gleichzeitig zu einer Optimierung von Arbeitsprogrammen des Gargeräts führt, sei es hinsichtlich eines Garergebnisses, eines Reinigungsergebnisses, eines Ressourcenverbrauchs oder dergleichen. Dabei lässt sich bspw. von einem von der Anmelderin unter dem Handelsnamen SelfCooking Center<(R)> vertriebenen Kombidämpfer als Gargerät ausgehen, das mit den zuvor beschriebenen Funktionen zusätzlich ausgestattet wird, um zu solch einer Optimierung zu gelangen.
Die in der voranstehenden Beschreibung, sowie den Ansprüchen und Ausführungsbeispielen offenbarten Merkmale der Erfindung können sowohl einzeln als auch in jeder beliebigen Kombination für die Verwirklichung der Erfindung in ihren verschiedenen Ausführungsformen wesentlich sein.

**Patentansprüche**

1.   Verfahren zum Bereitstellen eines intelligenten Mensch-Maschinen-Interfaces bei Gargeräten, bei dem eine Veränderung zumindest einer Einstellung eines Gargeräts wahlweise entweder durch zumindest eine Eingabe eines Anwenders an zumindest einer Eingabeeinrichtung für das Gargerät, oder durch zumindest eine durch eine Auswertung von Ausgabedaten zumindest eines Sensors bestimmte Handlung des Anwenders oder durch zumindest eine Bewegung von zumindest einem beweglichen Teil des Gargeräts durch den Anwender, hervorgerufen wird, der Anwender in eine oder mehrere Anwenderklassen eingeordnet werden kann, vorzugsweise mit einer Gewichtung, wobei ein zentrales Sammeln und Auswerten von Daten, die gewonnen werden auf der Grundlage von Anwenderverhalten, das anhand der Benutzung des Gargeräts und anhand von Sensordaten abgeschätzt und klassifiziert wird, durchgeführt und der Anwender aufgrund der Auswertung der Daten in eine Anwenderklasse eingeordnet wird, die Informationen über sein Nutzungsverhalten beinhaltet, und durch die Klassifizierung der Anwender automatisch eine Modifizierung von Parametern von Arbeitsprogrammen hervorgerufen wird.

2.   Verfahren nach Anspruch 1, **dadurch gekennzeichnet, dass** jedes Arbeitsprogramm in eine oder mehrere Arbeitsprogrammklassen eingeordnet werden kann, vorzugsweise mit einer Gewichtung, insbesondere für jede Arbeitsprogrammklasse.

3.   Verfahren nach Anspruch 1 oder 2, **dadurch gekennzeichnet, dass** zumindest eine Einstellung des Gargeräts verändert wird und/oder zumindest eine Information über das Gargerät ausgegeben wird, und zwar in Abhängigkeit von zumindest einer Klasseneinordnung.

4.   Verfahren nach einem der vorangehenden Ansprüche, **dadurch gekennzeichnet, dass** eine Anwenderklasseneinordnung in Abhängigkeit davon stattfindet, ob der Anwender zur Veränderung zumindest einer Einstellung des Gargeräts eine Eingabe an der Eingabeeinrichtung, eine Handlung oder eine Bewegung von zumindest einem beweglichen Teil des Gargeräts auswählt.

5. Verfahren nach einem der vorangehenden Ansprüche, **dadurch gekennzeichnet, dass** zur Anwenderklasseneinordnung zumindest eine erste Größe, die für zumindest eine Einstellung des Gargeräts durch den Anwender charakteristisch ist,
zumindest eine zweite Größe, die für zumindest eine Änderung einer Einstellung des Gargeräts durch den Anwender charakteristisch ist, und/oder
zumindest eine dritte Größe, die für die Zufriedenheit des Anwenders und/oder einer Überwachungsperson wie einem Servicetechniker, einem Kundenbetreuer, einem Gesundheitsinspektor, einem Küchenchef oder dergleichen, mit zumindest einem Arbeitsprogramm des Gargeräts charakteristisch ist, berücksichtigt wird bzw. werden.

6. Verfahren nach einem der vorangehenden Ansprüche, **dadurch gekennzeichnet, dass** die Eingabeeinrichtung als Bestandteil des Gargeräts, eines Computers, einer Fernbedienung und/oder eines Mobiltelefons ausgewählt wird, insbesondere für eine Eingabe durch Berührung und/oder Spracheingabe, und/oder das bewegliche Teil als eine Tür, ein Deckel, ein Reinigungsmittelbehälter, ein Zubehör, wie ein Gargutträger, ein in Gargut einsteckbarer Garprozessfühler oder dergleichen, ein Gargutkonditionierer und/oder ein Sensor, Luftleitglied, ausgewählt wird.

7. Verfahren nach einem der vorangehenden Ansprüche, **dadurch gekennzeichnet, dass** die Einstellung des Gargeräts bestimmt wird aus der Einstellung zumindest einer Funktionseinheit des Gargeräts und/oder der Auswahl zumindest eines Arbeitsprogramms des Gargeräts.

8. Verfahren nach Anspruch 7, **dadurch gekennzeichnet, dass**
die Funktionseinheit als zumindest eine Heizeinrichtung, eine Kühleinrichtung, eine Einrichtung zum Zuführen von Feuchtigkeit in einen Garraum, eine Einrichtung zum Abführen von Feuchtigkeit aus dem Garraum, eine Einrichtung zum Zuführen eines Gases in den Garraum, eine Einrichtung zum Beschwaden, eine Einrichtung zum Abführen eines Gases aus dem Garraum, eine Datenübertragungseinrichtung, eine Anzeigeeinrichtung, eine Ausgabeeinrichtung, eine Eingabeeinrichtung, eine Reinigungseinrichtung, eine Gebläseeinrichtung, eine Zirkulationseinrichtung, eine Sensiereinrichtung, eine Auswerteinrichtung, eine Speichereinrichtung, Beleuchtungseinrichtung, insbesondere für den Garraum, und/oder eine Steuer- oder Regeleinrichtung ausgewählt wird, und/oder das Arbeitsprogramm als ein Garprogramm, ein Reinigungsprogramm, ein Diagnoseprogramm, ein Hilfefunktionsprogramm und/oder ein Betriebsartenprogramm ausgewählt wird.

9. Verfahren nach einem der vorangehenden Ansprüche, **dadurch gekennzeichnet, dass** zur Klasseneinordnung zumindest eine Zeitinformation berücksichtigt wird, wobei die Zeitinformation insbesondere bestimmt wird aus einer Uhrzeit, einer Tageszeit, einer Jahreszeit, einem Datum, einer Dauer, einer Pausenzeit und/oder einer Frequenz.

10. Verfahren nach Anspruch 9, **dadurch gekennzeichnet, dass**
die Zeitinformation über zumindest einen Zeitgeber, in einer Speichereinrichtung des Gargeräts oder ausserhalb des Gargeräts hinterlegte Daten, eine mit dem Gargerät in Datentransferverbindung stehende Auswerteinrichtung, den Betrieb zumindest einer der Funktionseinheiten des Gargeräts über die Zeit und/oder die Einstellung einer Betriebsart, eines Soll-Garraumklimas, eines Soll-Gargrads, eines Soll-Reinigungsgrads und/oder eines Soll-Ressourcenverbrauchs über die Zeit bestimmt wird.

11. Verfahren nach Anspruch 9 oder 10, **dadurch gekennzeichnet, dass**
die Zeitinformation bestimmt wird aus einem zeitlichen Verlauf, vorzugsweise ab erster In-Betrieb-Nahme des Gargeräts, ab letzter Ein-Schaltung des Gargeräts, ab letztem Aufruf zumindest eines Arbeitsprogramms, ab einer bestimmten Uhrzeit, Tageszeit und/oder Jahreszeit, innerhalb einer Saison und/oder innerhalb eines, insbesondere von dem Anwender und/oder einer Überwachungsperson angegebenen Zeitraums.

12. Verfahren nach einem der vorangehenden Ansprüche, **dadurch gekennzeichnet, dass** die Zufriedenheit des Anwenders und/oder einer Überwachungsperson, insbesondere automatisch, abgefragt wird, vorzugsweise nach Durchführung zumindest eines Teils eines Arbeitsprogramms, insbesondere direkt im Anschluss an das Arbeitsprogramm oder zu einem bestimmten späteren, vorzugsweise auswählbaren, Zeitpunkt, und/oder der Anwender und/oder die Überwachungsperson die Zufriedenheit mit dem Betrieb zumindest einer der Funktionseinheiten des Gargeräts und/oder der Durchführung eines der Arbeitsprogramme zu einem von ihm/ihr ausgewählten Zeitpunkt, insbesondere über die Eingabeeinrichtung, ein Intranet, das Internet und/oder drahtlos, eingeben kann.

**13.** Verfahren nach einem der vorangehenden Ansprüche, **dadurch gekennzeichnet, dass** die Gewichtung jeder Klasse bei der Veränderung zumindest einer Einstellung des Gargeräts und/oder dem Ausgeben zumindest einer Information über das Gargerät berücksichtigt wird.

**14.** Verfahren nach einem der vorangehenden Ansprüche, **dadurch gekennzeichnet, dass** bei einer Vielzahl von Anwendern jeder Anwender mit Hilfe zumindest eines Sensors, durch zumindest eine Eingabe an der Eingabeeinrichtung und/oder über die erste, zweite und/oder dritte Größe identifiziert wird.

**15.** Verfahren nach einem der vorangehenden Ansprüche, **dadurch gekennzeichnet, dass** zumindest ein Kriterium der Einordnung eines Anwenders in einer Anwenderklasse und/oder zumindest ein Kriterium der Einordnung eines Arbeitsprogramms in einer Arbeitsprogrammklasse geändert werden kann bzw. können, insbesondere von dem Anwender und/oder der Überwachungsperson, vorzugsweise über die Eingabeeinrichtung, ein Intranet, das Intranet, ein Telefon und/oder drahtlos.

**16.** Verfahren nach Anspruch 15, **dadurch gekennzeichnet, dass**
die erste, zweite und/oder dritte Größe geändert werden kann bzw. können, und/oder in Abhängigkeit einer benutzten Funktionseinheit und/oder eines benutzten Zubehörs und/oder durch Aufrufen eines bestimmten Arbeitsprogrammes, insbesondere Diagnoseprogramms, zumindest ein Klasseneinordnungskriterium, vorzugsweise als Funktion der Zeit, geändert werden kann.

**17.** Verfahren nach einem der vorangehenden Ansprüche, **dadurch gekennzeichnet, dass** zumindest eine Einstellung des Anwenders und/oder zumindest eine automatische Einstellung des Gargeräts bei Auswahl eines Arbeitsprogramms desselben durch den Anwender auf Plausibilität überprüft und/oder in Abhängigkeit von einer Klasseneinordnung verändert wird, vorzugsweise nach Durchführung eines bestimmten Arbeitsprogramms für zukünftige Durchführungen zumindest dieses Arbeitsprogramms.

**18.** Verfahren nach einem der Ansprüche 3 bis 17, **dadurch gekennzeichnet, dass** bei Veränderung eines Arbeitsprogramms einer Arbeitsprogrammklasse auch alle weiteren Mitglieder dieser Arbeitsprogrammklasse verändert werden.

**19.** Verfahren nach einem der Ansprüche 2 bis 18, **dadurch gekennzeichnet, dass** die Arbeitsprogrammklasseneinordnung in Abhängigkeit des Betriebs der beim Durchführen des entsprechenden Arbeitsprogramms involvierten Funktionseinheit(en) des Gargeräts, Betriebsart(en) des Gargeräts, eines Soll-Garraumklimas, eines Soll-Garegrads, einen Soll-Reinigungsgrads und/oder eines Soll-Ressourcenverbrauchs durchgeführt wird.

**20.** Verfahren nach einem der vorangehenden Ansprüche, **dadurch gekennzeichnet, dass** zumindest eine in Abhängigkeit einer Klasseneinordnung vorgenommene Veränderung der Einstellung des Gargeräts und/oder Ausgabe einer Information automatisch durchgeführt wird, nach Bestätigung der automatisch vorgeschlagenen Veränderung durchgeführt wird, und/oder nach Abfrage der vorgeschlagenen Veränderung durchgeführt wird, wobei vorzugsweise die vorgeschlagene Änderung von dem Anwender und/oder der Überwachungsperson verändert werden kann.

**21.** Verfahren nach einem der vorangehenden Ansprüche, **dadurch gekennzeichnet, dass** in dem Fall, in dem es sich bei der Veränderung um eine Veränderung der Einstellung der Anzeigeeinrichtung des Gargeräts handelt, auf der ein Bedienmenü angezeigt wird, das Bedienmenü in Abhängigkeit von der Klasseneinordnung geändert wird, insbesondere durch Weglassen von zumindest einer Information, Weglassen zumindest einer Eingabemöglichkeit, Hinzufügen zumindest einer anderen Information, Hinzufügen zumindest einer anderen Eingabemöglichkeit und/oder Umsortieren von Abläufen und/oder Informationen und/oder Eingabemöglichkeiten.

**22.** Verfahren nach einem der Ansprüche 3 bis 21, **dadurch gekennzeichnet, dass** die in Abhängigkeit von einer Klasseneinordnung ausgegebene Information eine Hilfeinformation und/oder eine Beurteilung des Betriebs zumindest einer der Funktionseinheiten des Gargeräts und/oder eine Beurteilung des Anwenders und/oder eine Beurteilung eines Garergebnisses, eines Reinigungsergebnisses und/oder verbrauchter Ressourcen umfasst.

**23.** Verfahren nach einem der Ansprüche 3 bis 22, **dadurch gekennzeichnet, dass** die in Abhängigkeit von einer Klasseneinordnung ausgegebene Information zumindest einen Teil des Verlaufs zumindest einer Messgröße über die Zeit, insbesondere zu einem Garraumklima, einem Gargrad, einem Reinigungsgrad und/oder dem Einsparen von Ressourcen, wie Gas, Strom, Wasser, Reinigungsmittel, Zeit oder dergleichen, und/oder zumindest einen Teil des Ablaufs eines ausgewählten Arbeitsprogramms, insbesondere als Funktion der Zeit, umfasst.

**24.** Verfahren nach einem der Ansprüche 3 bis 23, **dadurch gekennzeichnet, dass** die in Abhängigkeit von einer Klasseneinordnung ausgegebene Information über die Anzeigeeinrichtung des Gargeräts oder eine vom Gargerät getrennten Anzeigeeinrichtung, wie in einem Kontrollzentrum, einer Wartungsstation, auf einer Fernbedienung oder dergleichen, angezeigt wird, wobei vorzugsweise die Anzeige in Form alphanumerischer Zeichen, Symbole und/oder graphisch stattfindet und/oder die angezeigte Information gespeichert und/oder ausgedruckt werden kann.

**25.** Verfahren nach einem der vorangehenden Ansprüche, **dadurch gekennzeichnet, dass** eine Vielzahl von Informationen gleichzeitig oder sich zumindest teilweise überlappend angezeigt wird.

**26.** Gargerät mit einer Steuer- und/oder Regeleinrichtung, eingerichtet zum Durchführen eines Verfahrens nach einem der vorangehenden Ansprüche.

**Claims**

**1.** A method for creating an intelligent human-machine interface for cooking devices,
wherein
a change of at least one setting of a cooking device is selectively caused either by at least one input made by a user on at least one input device for the cooking device, or by at least one action performed by the user which is determined by an evaluation of output data of at least one sensor, or by at least one movement of at least one movable part of the cooking device effected by the user,
the user can be classified as belonging to one or several classes of users, preferably including a weighting, wherein data obtained on the basis of the behavior of the user, which behavior is estimated and classified based on the use of the cooking device and based on sensor data, is centrally collected and evaluated, and the user is classified as belonging to a class of users based on the evaluation of the data, which class of users contains information relating to his/her behavior as a user, and
the classification of the users automatically causes a modification of parameters of working programs.

**2.** The method according to Claim 1, **characterized in that**
each working program can be classified as belonging to one or several classes of working programs, preferably including a weighting, in particular for each class of working programs.

**3.** The method according to Claim 1 or 2, **characterized in that**
at least one setting of the cooking device is changed and/or at least one piece of information relating to the cooking device is output, depending on at least one classification.

**4.** The method according to any one of the preceding claims, **characterized in that**
a classification as belonging to a class of users is made depending on whether the user chooses to make an input on the input device, perform an action, or effect a movement of at least one movable part of the cooking device in order to change at least one setting of the cooking device.

**5.** The method according to any one of the preceding claims, **characterized in that**
in order to make a classification as belonging to a class of users, at least one first parameter which is characteristic of at least one setting of the cooking device made by the user,
at least one second parameter which is characteristic of at least one change of a setting of the cooking device made by the user, and/or
at least one third parameter which is characteristic of the degree of satisfaction of the user and/or of a supervisor, such as a service technician, a customer care specialist, a health inspector, a chef or the like, with at least one working program of the cooking device is/are taken into account.

**6.** The method according to any one of the preceding claims, **characterized in that**
the input device is selected as a component of the cooking device, of a computer, of a remote control and/or of a mobile phone, in particular for an input by means of touch and/or speech input, and/or the movable part is selected as a door, a lid, a cleaning agent container, an accessory such as a support for the product to be cooked, a cooking process sensor which can be inserted in the product to be cooked or the like, a conditioner for the product to be cooked and/or a sensor, an air duct element.

**7.** The method according to any one of the preceding claims, **characterized in that**

the setting of the cooking device is determined based on the setting of at least one functional unit of the cooking device and/or the selection of at least one working program of the cooking device.

8. The method according to Claim 7, **characterized in that**
the functional unit is selected as at least one heating device, a cooling device, a device for supplying humidity into a cooking chamber, a device for removing humidity from the cooking chamber, a device for supplying a gas into the cooking chamber, a steaming device, a device for removing a gas from the cooking chamber, a data transmission device, a display device, an output device, an input device, a cleaning device, a fan device, a circulation device, a sensing device, an evaluation device, a memory device, a lighting device, in particular for the cooking chamber, and/or a control or regulation device, and/or the working program is selected as a cooking program, a cleaning program, a diagnosis program, a help function program and/or an operation mode program.

9. The method according to any one of the preceding claims, **characterized in that**
at least one piece of time information is taken into account for classification, wherein said time information is in particular determined based on a time given by a clock, a time of day, a time of the year, a date, a duration, a break time and/or a frequency.

10. The method according to Claim 9, **characterized in that**
the time information is determined by means of at least one timer, data stored in a memory device of the cooking device or outside the cooking device, an evaluation device which is connected to the cooking device by a data transfer connection, the operation of at least one of the functional units of the cooking device over time, and/or the setting of a mode of operation, a desired cooking chamber climate, a desired degree of cooking, a desired degree of cleaning and/or a desired use of resources over time.

11. The method according to Claim 9 or 10, **characterized in that**
the time information is determined based on a development over time, preferably starting from the time the cooking device was first put into operation, the time the cooking device was last switched on, the time at least one working program was last started, a specific time given by a clock, a time of day, and/or time of the year, within a season and/or within a period of time which is in particular indicated by the user and/or a supervisor.

12. The method according to any one of the preceding claims, **characterized in that**
the degree of satisfaction of the user and/or of a supervisor is ascertained, in particular automatically, preferably when at least part of a working program has been carried out, in particular immediately when the working program is finished or at a specific later time which can preferably be selected, and/or the user and/or the supervisor can enter his/her degree of satisfaction with the operation of at least one of the functional units of the cooking device and/or the realization of one of the working programs at a time selected by him/her, in particular by means of the input device, via an intranet, the internet and/or in a wireless manner.

13. The method according to any one of the preceding claims, **characterized in that**
the weighting of each class is taken into account when at least one setting of the cooking device is changed and/or at least one piece of information relating to the cooking device is output.

14. The method according to any one of the preceding claims, **characterized in that**
in case of multiple users, each user is identified with the aid of at least one sensor, by at least one input made on the input device, and/or based on the first, second and/or third parameter.

15. The method according to any one of the preceding claims, **characterized in that**
at least one criterion of the classification of a user as belonging to a class of users and/or at least one criterion of the classification of a working program as belonging to a class of working programs can be changed, in particular by the user and/or the supervisor, preferably by means of the input device, via an intranet, the internet, a telephone and/or in a wireless manner.

16. The method according to Claim 15, **characterized in that**
the first, second and/or third parameter can be changed, and/or at least one criterion for classification can be changed, preferably as a function of time, depending on a functional unit used and/or an accessory used and/or by starting a specific working program, in particular a diagnosis program.

17. The method according to any one of the preceding claims, **characterized in that**

at least one setting made by the user and/or at least one automatic setting of the cooking device at the time a working program of said cooking device is selected is checked for plausibility by the user and/or is changed depending on a classification, preferably once a specific working program has been carried out and in order to carry out at least this working program in the future.

18. The method according to any one of claims 3 to 17, **characterized in that**
upon change of a working program of a class of working programs, all the other members of this class of working programs are changed too.

19. The method according to any one of claims 2 to 18, **characterized in that**
the classification as belonging to a class of working programs is made depending on the operation of the functional unit(s) of the cooking device which is/are involved in carrying out the relevant working program, the mode(s) of operation of the cooking device, a desired cooking chamber climate, a desired degree of cooking, a desired degree of cleaning and/or a desired use of resources.

20. The method according to any one of the preceding claims, **characterized in that**
at least one change of the setting of the cooking device, which is made depending on a classification, and/or output of information is carried out automatically, is carried out once the change proposed automatically is confirmed, and/or is carried out once the proposed change has been retrieved, wherein the proposed change can preferably be changed by the user and/or the supervisor.

21. The method according to any one of the preceding claims, **characterized in that**
in case the change is a change of the setting of the display device of the cooking device where an operation menu is displayed, the operation menu is changed depending on the classification, in particular by omitting at least one piece of information, omitting at least one input option, adding at least one other piece of information, adding at least one other input option, and/or re-arranging routines and/or information and/or input options.

22. The method according to any one of Claims 3 to 21, **characterized in that**
the information which is output depending on a classification comprises help information and/or an evaluation of the operation of at least one of the functional units of the cooking device, and/or an evaluation of the user, and/or an evaluation of a result of cooking, a result of cleaning and/or resources used.

23. The method according to any one of Claims 3 to 22, **characterized in that**
the information which is output depending on a classification comprises at least part of the development of at least one measured parameter over time, in particular relating to a cooking chamber climate, a degree of cooking, a degree of cleaning and/or the reduced use of resources such as gas, electricity, water, cleaning agent, time or the like, and/or at least part of the development of a selected working program, in particular as a function of time.

24. The method according to any one of Claims 3 to 23, **characterized in that**
the information which is output depending on a classification is displayed by means of the display device of the cooking device or a display device which is separate from the cooking device, such as in a control centre, a servicing station, on a remote control or the like, wherein the information is preferably displayed in the form of alphanumerical signs, symbols and/or graphically, and/or the information which is displayed can be stored and/or printed.

25. The method according to any one of the preceding claims, **characterized in that**
multiple pieces of information are displayed at the same time or at least so as to overlap at least partly.

26. A cooking device having a control and/or regulation device, configured for carrying out a method according to any one of the preceding claims.

**Revendications**

1. Procédé de fourniture d'une interface homme-machine intelligente pour des appareils de cuisson, dans lequel

- un changement d'au moins un réglage d'un appareil de cuisson est provoquée au choix
• par au moins une entrée d'un utilisateur au niveau d'au moins un dispositif d'entrée de l'appareil de cuisson, ou par au moins une action de l'utilisateur, déterminée par une évaluation de données de sortie d'au moins un détecteur, ou par au moins un mouvement d'au moins une pièce mobile de l'appareil de cuisson par l'utilisateur,
- l'utilisateur peut être affecté à une ou plusieurs classes d'utilisateur, de préférence avec une pondération, dans lequel ont lieu un recueil et l'évaluation de données centralisé, qui sont obtenues sur la base de comportements d'utilisateur qui seront évalués et classés au travers de l'utilisation de l'appareil de cuisson et de données de détecteurs, et l'utilisateur est placé dans une classe d'utilisateurs sur la base de l'évaluation des données, qui comporte des informations sur son comportement d'utilisation, et
une modification de paramètres de programmes de travail est réalisée de manière automatique grâce à la classification de l'utilisateur.

2. Procédé selon la revendication 1, **caractérisé en ce que**
chaque programme de travail peut être affecté à une ou plusieurs classes de programme de travail, de préférence avec une pondération, en particulier pour chaque classe de programme de travail.

3. Procédé selon la revendication 1 ou 2, **caractérisé en ce que**
au moins un réglage de l'appareil de cuisson est modifié et/ou au moins une information est émise par l'intermédiaire de l'appareil de cuisson, et ce, en fonction d'au moins une affectation de classe.

4. Procédé selon l'une quelconque des revendications précédentes, **caractérisé en ce que** une affectation de classe d'utilisateur a lieu en fonction du choix par l'utilisateur d'une entrée au niveau du dispositif d'entrée, d'une manipulation ou d'un déplacement d'au moins une pièce mobile de l'appareil de cuisson en vue de la modification d'au moins un réglage de l'appareil de cuisson.

5. Procédé selon l'une quelconque des revendications précédentes, **caractérisé en ce que**
au moins une première grandeur, qui est caractéristique d'au moins un réglage de l'appareil de cuisson par l'utilisateur,
au moins une deuxième grandeur, qui est caractéristique d'au moins une modification d'un réglage de l'appareil de cuisson par l'utilisateur, et/ou
au moins une troisième grandeur, qui est caractéristique de la satisfaction éprouvée par l'utilisateur et/ou une personne affectée à la surveillance, comme un technicien de service, un gestionnaire de clientèle, un inspecteur des affaires sanitaires, un chef de cuisine ou similaire, envers au moins un programme de travail de l'appareil de cuisson,
est ou sont prise(s) en compte en vue d'une affectation de classe d'utilisateur.

6. Procédé selon l'une quelconque des revendications précédentes, **caractérisé en ce que**
le dispositif d'entrée est choisi en tant que constituant de l'appareil de cuisson, d'un ordinateur, d'une commande à distance et/ou d'un téléphone mobile, en particulier pour une entrée manuelle et/ou vocale, et/ou la pièce mobile est choisie en tant que porte, capot, réservoir de produits de nettoyage, accessoire, comme un support de produit à cuire, un capteur de processus de cuisson pouvant être enfiché dans le produit à cuire ou similaire, conditionnement de produit à cuire et/ou capteur, élément de guidage de l'air.

7. Procédé selon l'une quelconque des revendications précédentes, **caractérisé en ce que** le réglage de l'appareil de cuisson est déterminé à partir du réglage d'au moins une unité fonctionnelle de l'appareil de cuisson et/ou du choix d'au moins un programme de travail de l'appareil de cuisson.

8. Procédé selon la revendication 7, **caractérisé en ce que**
l'unité fonctionnelle est choisie en tant qu'au moins un dispositif de chauffage, un dispositif réfrigérant, un dispositif destiné à acheminer de l'humidité dans un espace de cuisson, un dispositif destiné à évacuer de l'humidité hors de l'espace de cuisson, un dispositif destiné à acheminer un gaz dans l'espace de cuisson, un dispositif destiné à brumiser, un dispositif destiné à évacuer un gaz hors de l'espace de cuisson, un dispositif de transfert de données, un dispositif d'affichage, un dispositif d'émission, un dispositif d'entrée, un dispositif de nettoyage, un dispositif de ventilation, un dispositif de circulation, un dispositif de détection, un dispositif d'évaluation, un dispositif de mémorisation, un dispositif d'éclairage, en particulier pour l'espace de cuisson, et/ou un dispositif de commande ou régulation, et/ou le programme de travail est choisi en tant que programme de cuisson, programme de nettoyage, programme de diagnostic, programme de fonction auxiliaire et/ou programme de types de fonctionnement.

9. Procédé selon l'une quelconque des revendications précédentes, **caractérisé en ce que** au moins une information temporelle est prise en compte pour l'affectation des classes, l'information temporelle étant en particulier déterminée à partir d'une heure, d'un moment de la journée, d'un moment de l'année, d'une date, d'une durée, d'un temps de pause et/ou d'une fréquence.

10. Procédé selon la revendication 9, **caractérisé en ce que**
l'information temporelle est déterminée par l'intermédiaire d'au moins une minuterie, de données stockées dans un dispositif de mémorisation de l'appareil de cuisson ou à l'extérieur de l'appareil de cuisson, d'un dispositif d'évaluation se trouvant en liaison de transfert de données avec l'appareil de cuisson, du fonctionnement d'au moins une des unités fonctionnelles de l'appareil de cuisson au cours du temps et/ou du réglage d'un type de fonctionnement, d'un climat théorique d'espace de cuisson, d'un degré théorique de cuisson, d'un degré théorique de nettoyage et/ou d'une consommation théorique de ressources au cours du temps.

11. Procédé selon la revendication 9 ou 10, **caractérisé en ce que**
l'information temporelle est déterminée à partir d'un déroulement temporel, de préférence à partir de la première mise en fonctionnement de l'appareil de cuisson, à partir de la dernière mise en marche de l'appareil de cuisson, à partir du dernier recours à au moins un programme de travail, à partir d'une heure déterminée, d'un moment de la journée déterminé et/ou d'un moment de l'année déterminé, au sein d'une saison et/ou au sein d'un intervalle de temps, en particulier indiqué(e) par l'utilisateur et/ou par une personne affectée à la surveillance.

12. Procédé selon l'une quelconque des revendications précédentes, **caractérisé en ce que**
la satisfaction de l'utilisateur et/ou d'une personne affectée à la surveillance, est demandée, en particulier de manière automatique, de préférence après l'exécution d'au moins une partie d'un programme de travail, en particulier directement à la suite du programme de travail ou à un moment ultérieur déterminé, pouvant de préférence être sélectionné, et/ou l'utilisateur et/ou la personne affectée à la surveillance peut indiquer sa satisfaction envers le fonctionnement d'au moins une des unités fonctionnelles de l'appareil de cuisson et/ou la mise en oeuvre d'un des programmes de travail à un moment sélectionné par lui(eux)-même, en particulier par l'intermédiaire du dispositif d'entrée, d'un Intranet, de l'Internet et/ou par liaison sans fil.

13. Procédé selon l'une quelconque des revendications précédentes, **caractérisé en ce que** la pondération de chaque classe est prise en compte par l'appareil de cuisson lors de la modification d'au moins un réglage de l'appareil de cuisson et/ou lors de l'émission d'au moins une information.

14. Procédé selon l'une quelconque des revendications précédentes, **caractérisé en ce que** pour une pluralité d'utilisateurs, chaque utilisateur est identifié à l'aide d'au moins un détecteur, grâce à au moins une entrée au niveau du dispositif d'entrée et/ou par l'intermédiaire des première, deuxième et/ou troisième valeurs.

15. Procédé selon l'une quelconque des revendications précédentes, **caractérisé en ce que** au moins un critère de l'affectation d'un utilisateur à une classe d'utilisateur et/ou au moins un critère de l'affectation d'un programme de travail à une classe de programme de travail peut ou peuvent être modifié(s), en particulier par l'utilisateur et/ou la personne affectée à la surveillance, de préférence par l'intermédiaire du dispositif d'entrée, d'un Intranet, de l'Internet, d'un téléphone et/ou par liaison sans fil.

16. Procédé selon la revendication 15, **caractérisé en ce que**
les première, deuxième et/ou troisième valeurs peuvent être modifiées, et/ou au moins un critère d'affectation de classe peut être modifié en fonction d'une unité fonctionnelle utilisée et/ou d'un accessoire utilisé et/ou par recours à un programme de travail déterminé, en particulier un programme de diagnostic, de préférence en tant que fonction temporelle.

17. Procédé selon l'une quelconque des revendications précédentes, **caractérisé en ce que** au moins un réglage de l'utilisateur et/ou au moins un réglage automatique de l'appareil de cuisson lors de la sélection d'un programme de travail de celui-ci est vérifié par l'utilisateur quant à sa vraisemblance et/ou est modifié en fonction d'une affectation de classe, de préférence après l'exécution d'un programme de travail déterminé, pour des mises en oeuvre futures d'au moins ce programme de travail.

18. Procédé selon l'une quelconque des revendications 3 à 17, **caractérisé en ce que** lors de la modification d'un programme de travail d'une classe de programme de travail, tous les autres membres de cette classe de programme de travail sont également modifiés.

19. Procédé selon l'une quelconque des revendications 2 à 18, **caractérisé en ce que** l'affectation de classe de programme de travail est réalisée en fonction du fonctionnement de l'unité ou des unité(s) fonctionnelle(s) de l'appareil de cuisson impliquée(s) lors de la mise en oeuvre du programme de travail correspondant, du ou des types de fonctionnement de l'appareil de cuisson, d'un climat théorique d'espace de cuisson, d'un degré théorique de cuisson, d'un degré théorique de nettoyage et/ou d'une consommation théorique de ressources.

20. Procédé selon l'une quelconque des revendications précédentes, **caractérisé en ce que** au moins une modification entreprise en fonction d'une affectation de classe, du réglage de l'appareil de cuisson et/ou d'une émission d'une information est effectuée de manière automatique, est effectuée après confirmation de la modification automatiquement proposée, et/ou est réalisée après demande de la modification conseillée, la modification conseillée pouvant de préférence être modifiée par l'utilisateur et/ou la personne affectée à la surveillance.

21. Procédé selon l'une quelconque des revendications précédentes, **caractérisé en ce que** dans le cas où la modification est une modification du réglage du dispositif d'affichage de l'appareil de cuisson, sur lequel est affiché un menu utilisateur, le menu utilisateur est modifié en fonction de l'affectation de classe, en particulier par l'abandon d'au moins une information, l'abandon d'au moins une possibilité d'entrée, l'ajout d'au moins une autre information, l'ajout d'au moins une autre possibilité d'entrée et/ou le tri de procédures et/ou d'informations et/ou de possibilités d'entrée.

22. Procédé selon l'une quelconque des revendications 3 à 21, **caractérisé en ce que** l'information émise en fonction d'une affectation de classe comprend une information auxiliaire et/ou une évaluation du fonctionnement d'au moins une des unités fonctionnelles de l'appareil de cuisson et/ou une évaluation de l'utilisateur et/ou une évaluation d'un résultat de cuisson, d'un résultat de nettoyage et/ou des ressources consommées.

23. Procédé selon l'une quelconque des revendications 3 à 22, **caractérisé en ce que** l'information émise en fonction d'une affectation de classe comprend au moins une partie de l'évolution d'au moins une grandeur de mesure au cours du temps, en particulier par rapport à un climat d'espace de cuisson, un degré de cuisson, un degré de nettoyage et/ou l'économie de ressources, comme le gaz, l'énergie électrique, l'eau, le produit de nettoyage, le temps ou similaire, et/ou au moins une partie du déroulement d'un programme de travail sélectionné, en particulier en tant que fonction temporelle.

24. Procédé selon l'une quelconque des revendications 3 à 23, **caractérisé en ce que** l'information émise en fonction d'une affectation de classe est affichée par l'intermédiaire du dispositif d'affichage de l'appareil de cuisson ou d'un dispositif d'affichage séparé de l'appareil de cuisson, comme dans un centre de contrôle, un poste d'entretien, sur une commande à distance ou similaire, l'affichage pouvant de préférence se faire sous forme de signes alphanumériques, de symboles et/ou de manière graphique et/ou l'information affichée pouvant être mémorisée et/ou imprimée.

25. Procédé selon l'une quelconque des revendications précédentes, **caractérisé en ce que** une pluralité d'informations est affichée simultanément ou en se chevauchant au moins partiellement.

26. Appareil de cuisson ayant un dispositif de commande et/ou réglage, configurer pour l'exécution d'un procédé selon l'une quelconque des revendications précédentes.

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 10236960 A1
- DE 10300465 A1
- EP 1758000 A1
- EP 0285056 B1
- EP 1605730 A1
- US 6400996 B1
- EP 1528464 A2
- EP 1624689 A1
- WO 0112039 A2
- WO 2007027621 A2
- US 5875430 A
- DE 10103948 A1
- DE 102004013553 A1